# EUROPÄISCHE PATENTSCHRIFT

(11) **EP 0 879 255 B1**
(45) Veröffentlichungstag und Bekanntmachung des Hinweises auf die Patenterteilung: **21.11.2001**
(21) Anmeldenummer: 97902172.2
(22) Anmeldetag: 15.01.1997
(51) Int. Cl.: C08G 18/62

(54) **BINDEMITTEL FUR LACKE AUF POLYURETHANBASIS**
BINDING AGENTS FOR POLYURETHANE-BASED PAINTS
LIANTS POUR PEINTURES A BASE DE POLYURETHANE

(30) Priorität: 10.02.1996 DE 19604911
(43) Veröffentlichungstag der Anmeldung: 25.11.1998
(73) Patentinhaber: BASF Coatings AG, 48165 Münster (DE)
(72) Erfinder: RINK, Heinz-Peter, D-48153 Münster (DE); MAYER, Bernd, D-48165 Münster (DE); NIENHAUS, Egbert, D-59387 Ascheberg (DE)
(74) Vertreter: Fitzner, Uwe, Dr.
(86) Internationale Anmeldenummer: EP9700149
(87) Internationale Veröffentlichungsnummer: WO9729142

(56) Entgegenhaltungen:
- EP-A- 0 358 979
- EP-A- 0 622 378
- Firmenschrift der TH.Goldschmidt AG vom Oktober 1995 " Alpha, omega-Polymethacrylate Diols , a new class of linear macrodiols".

## Beschreibung

Die Erfindung betrifft ein Beschichtungsmittel für die Herstellung schwitzwasserbeständiger Beschichtungen, enthaltend Bindemittel auf Polyurethanbasis, welche alpha-omega-Polymethacrylatdiole als Struktureinheiten aufweisen, sowie als weitere Bindemittel noch mindestens ein Polyacrylatharz PAC und/oder mindestens ein Polyesterharz PES. Bevor-zugt werden die erfindungsgemäßen Beschichtungsmittel als Füller, Basislacke, Klarlacke und/oder Decklacke eingesetzt.

Konventionelle, das heißt organisch gelöste, Beschichtungsmittel auf der Basis hydroxylgruppenhaitiger Bindemittel und isocyanatgruppenhaltiger Vernetzungsmittel stellen üblicherweise Mehrkomponentensysteme dar. Die eine Komponente enthält das Bindemittel, gegebenenfalls Pigmente und Füllstoffe sowie übliche Hilfs- und Zusatzstoffe, die andere Komponente enthält das Vernetzungsmittel. Ferner wird noch ein im wesentlichen aus einer Mischung verschiedener Lösemittel bestehender Einstellzusatz zur Einstellung der gewünschten Viskosität des Beschichtungsmittels bereitgestellt.

Die Lackindustrie ist weiterhin aus ökologischen und ökonomischen Gründen bestrebt, einen möglichst großen Teil der in Lacken eingesetzten organischen Lösemittel durch Wasser zu ersetzen. Insbesondere bei der Automobillackierung besteht ein großer Bedarf an wäßrigen Lacken. Dies gilt sowohl für den Bereich der Automobilserienlackierung als auch für den Bereich der Autoreparaturlackierung.

Wäßrige Beschichtungsmittel kommen dabei insbesondere im Bereich der Decklacke zum Einsatz. Unter Decklacken werden hierbei Lacke verstanden, die zur Herstellung der obersten Lackschicht verwendet werden. Die oberste Lackschicht kann dabei einschichtig oder mehrschichtig, insbesondere zweischichtig sein. Zweischichtige Decklackierungen bestehen aus einer pigmentierten Basislackschicht und einer auf der Basislackschicht aufgebrachten unpigmentierten oder nur mit transparenten Pigmenten pigmentierten Klarlackschicht.

Zweischichtlackierungen werden heute nach dem Naß-in-Naß-Verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen gehärtet werden. Dieses Verfahren ist ökonomisch sehr vorteilhaft, stellt aber hohe Anforderungen an den Basislack und den Klarlack. Der auf den noch nicht gehärteten Basislack applizierte Klarlack darf die Basislackschicht nicht stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden. Ferner müssen die Deckbeschichtungszusammensetzungen durch Spritzen applizierbar sein. Dazu müssen sie bei Spritzviskosität einen so hohen Feststoffgehalt aufweisen, daß mit 1 bis 3 Spritzgängen (Kreuzgängen) Lackfilme mit ausreichender Schichtdicke erhalten werden, und sie müssen eingebrannte Lackfilme liefern, die ein gutes Aussehen (guter Verlauf, hoher Glanz, geringe Kocherneigung, guter Decklackstand und hohe Härte) sowie eine gute Witterungsbeständigkeit zeigen.

Aus der EP-B-0 358 979 sind wäßrige Zweikomponenten-Polyurethanbeschichtungsmittel bekannt, die ein in Wasser dispergiertes, hydroxylgruppenhaltiges Polyacrylatharz sowie eine Polyisocyanatkomponente enthalten. Diese in der EP-B-0 358 979 beschriebenen Lacke zeigen allerdings hinsichtlich Glanz, Ausspannung (geringe Narbe der Beschichtung), Kocherneigung und dadurch bedingter Spritzsicherheit sowie hinsichtlich der Witterungsbeständigkeit, insbesondere hinsichtlich der Beständigkeit im Schwitzwasserkonstantklima (40 Grad C, 240 Stunden), Verarbeitbarkeit (Viskositätsabfall und zu kurze Topfzeit) und Härte große Nachteile.

In DE-A-44 21 823 werden 3-komponentige Beschichtungsmittel beschrieben, die dadurch gekennzeichnet sind, daß
1.) die Komponente (I) als Bindemittel (A)
   (A1) mindestens ein in einem oder mehreren organischen, wasserverdünnbaren Lösemitteln gelöstes oder dispergiertes, hydroxyl- und carboxylgruppenhaltiges Acrylatcopolymerisat (A1) mit einem zahlenmittleren Molekulargewicht zwischen 1.000 und 30.000, einer OH-Zahl von 40 bis 200 mgKOH/g und einer Säurezahl von 5 bis 150 mgKOH/g und/oder
   (A2) mindestens ein in einem oder mehreren organischen, wasserverdünnbaren Lösemitteln gelöstes oder dispergiertes, hydroxyl- und carboxylgruppenhaltiges Polyesterharz (A2) mit einem zahlenmittleren Molekulargewicht zwischen 1.000 und 30.000, einer OH-Zahl von 30 bis 250 mgKOH/g und einer Säurezahl von 5 bis 150 mgKOH/g und/oder
   (A3) mindestens ein in einem oder mehreren organischen, wasserverdünnbaren Lösemitteln gelöstes oder dispergiertes, hydroxyl- und carboxylgruppenhaltiges Polyurethanharz (A3) mit einem zahlenmittleren Molekulargewicht zwischen 1.000 und 30.000, einer OH-Zahl von 20 bis 200 mgKOH/g und einer Säurezahl von 5 bis 150 mgKOH/g und
   (A4) gegebenenfalls mindestens ein weiteres Bindemittel enthält, wobei die Bindemittel (A1) und/oder (A2) und/oder (A3) und gegebenenfalls (A4) so ausgewählt werden, daß eine 50 %ige Lösung des Bindemittels (A) in Ethoxyethylpropionat bei 23°C eine Viskosität von <= 2,5 dPa.s aufweist,
2.) die Komponente (II) als Vernetzungsmittel (F) mindestens ein gegebenenfalls in einem oder mehreren organischen Lösemitteln gelöstes oder dispergiertes, nichtblockiertes Di- und/oder Polyisocyanat (F1) und gegebenenfalls mindestens ein weiteres Vernetzungsmittel, bestehend aus mindestens einer Epoxidverbindung (F2) mit mindestens zwei Epoxidgruppen pro Molekül und/oder gegebenenfalls mindestens einem Aminoplastharz (F3), enthält und
3.) die Komponente (III) im wesentlichen bindemittelfrei ist und Wasser enthält.

Die DE-A-44 21 823 betrifft außerdem ein Verfahren zur Herstellung dieser Beschichtungsmittel sowie die Verwendung der Beschichtungsmittel in der Reparaturlackierung, für die Beschichtung von Kunststoffen sowie als Decklack oder Füller.
Die Beschichtungsmittel gemäß DE-A-44 21 823 weisen im Vergleich zu den Beschichtungsmitteln gemäß EP-B-0 358 979 durch einen verbesserten Glanz, verbesserte Ausspannung (geringe Narbe), geringere Kocherneigung und dadurch bedingt durch eine bessere Spritzsicherheit und durch eine verbesserte Witterungsbeständigkeit (Schwitzwasserkonstantklima-Test) aus.

In der noch nicht veröffentlichten deutschen Patentanmeldung 195 38 956.5 werden ebenfalls 3-komponentige Beschichtungsmittel beschrieben, die in den Komponenten (I) und (II) weitestgehend mit den Beschichtungsmitteln gemäß DE-A-44 21 823 übereinstimmen, bei denen aber die Komponente (III) die Bestandteile (A1) bis (A4) in wäßriger Dispersion als Bindemittel enthält.
Mit den Beschichtungsmitteln gemäß der unveröffentlichten deutschen Patentanmeldung 195 38 956.5 können Beschichtungen mit einem gegenüber DE-A-44 21 823 verbesserten Glanz, einer verbesserten Spritzsicherheit und einem verbesserten Verlauf erzeugt werden. Es besteht jedoch weiterer Verbesserungsbedarf, besonders hinsichtlich verbesserter Haftung der Beschichtung, insbesondere nach Belastung im Schwitzwasserklima.

In DE-A-35 45 618 werden Wasserbasislacke beschrieben, bestehend aus wäßrigen Dispersionen, enthaltend als filmbildendes Material mindestens ein Polyurethanharz mit einer Säurezahl von 5 bis 70 mg KOH/g, hergestellt aus einem Isocyanatgruppen sowie Polyether- und/oder Polyestersegmente aufweisenden Zwischenprodukt, das anschließend mit Polyolen, vorzugsweise Triolen, umgesetzt wird. Die Wasserbasislacke gemäß DE-A-35 45 618 werden vorzugsweise als Basislacke im "Basecoat/Clearcoat"-Verfahren, beispielsweise bei der Lackierung von Automobilen eingesetzt.
Auch bei Lacken gemäß DE-A-35 45 618 besteht Bedarf nach einer verbesserten Haftung auf dem Substrat, insbesondere im Schwitzwasserklima.

Aus der EP-A-0 622 378 sind alpha,omega-Polymethacrylatdiole, Verfahren zu ihrer Herstellung und ihre Verwendung zur Herstellung von Polymerisaten, insbesondere von Polyurethanen und Polyestern, bekannt. Die resultierenden Polyurethane und Polyester mit Polymethacrylatblöcken werden als Blockcopolymerisate mit anwendungtechnisch besonders vorteilhaften Eigenschaften beschrieben. Die Verwendung von Polyurethanen mit weiteren spezifischen Bausteinen neben den Polymethacrylatblöcken als Lackbindemittel wird von EP-A-0 622 378 nicht beschrieben.

Es ist bekannt Polyurethane unter Verwendung von alpha-omega-Polymethacrylatdiolen herzustellen, z.B. aus einer Firmenschrift der Th. Goldschmidt AG mit dem Titel α,ω-Polymethacrylate Diols - A New Class of Linear Macrodiols". Es ist aus dem Stand der Technik weder zu entnehmen, daß daraus schwitzwasserbeständige Beschichtungen erhalten werden können, noch daß sie mit weiteren Bindemitteln kombiniert eingesetzt werden können.

### Aufgabe und Lösung

Die der vorliegenden Erfindung zugrundeliegende Aufgabe war also die Bereitstellung von Beschichtungsmitteln auf Polyurethanbasis, die die Vorzüge der Polyurethan-Beschichtungsmittel mit einer verbesserten Haftung der Beschichtung auf verschiedensten Substraten, insbesondere im Schwitzwasserklima vereinigen.

Überraschenderweise wurde gefunden, daß Beschichtungsmittel enthaltend Polyurethanharze PUR als Bindemittel, die alpha-omega-Polymethacrylatdiole (A) als Monomerbausteine aufweisen, sowie als weitere Bindemittel noch mindestens ein Polyacrylatharz PAC und/oder mindestens ein Polyesterharz PES, zu Beschichtungen mit deutlich verbesserter Haftung im Schwitzwasserklima führen, als Beschichtungsmittel, die Polyurethanharze des Standes der Technik als Bindemittel enthalten.

Bevorzugt sind die erfindungsgemäßen Beschichtungsmittel auf wäßriger Basis, besonders bevorzugt wäßrige Füller, Basislacke, Klarlacke und/oder Decklacke.

Vorzugsweise liegt das erfindungsgemäße Polyurethanharz PUR als in Wasser gelöstes oder dispergiertes, hydroxyl- und carboxylgruppenhaltiges Polyurethanharz PUR mit einer OH-Zahl von 20 bis 200 mgKOH/g und einer Säurezahl von 5 bis 150 mgKOH/g vor.

In einer weiteren Ausführungsform der Erfindung liegt das erfindungsgemäße Polyurethanharz PUR als in einem oder mehreren organischen wasserverdünnbaren Lösemitteln gelöstes oder dispergiertes, hydroxyl- und carboxylgruppenhaltiges Polyurethanharz PUR mit einer OH-Zahl von 20 bis 200 mg KOH/g und einer Säurezahl von 5 bis 150 mg KOH/g vor.

Bevorzugt sind die neben dem erfindungsgemäßen Polyurethanharz PUR noch enthaltenen Polyacrylatharze PAC und/oder Polyesterharze PES vorzugsweise hydroxylgruppenhaltig.
Bevorzugt enthalten die Beschichtungsmittel als weitere Komponente isocyanatgruppenhaltige Vemetzungsmittel.

### Durchführung der Erfindung

### Das erfindungsgemäße Polyurethanharz PUR

Als erfindungswesentliche Komponente (A) enthalten die Polyurethanharze PUR alpha,omega-Polymethacrylatdiole, wie sie beispielsweise in EP-A-0 622 378 beschrieben sind. Gemäß EP-A-0 622 378 können die alpha,omega-Polymethacrylatdiole durch Umsetzung von durch radikalische Polymerisation in Gegenwart eines hydroxyfunktionellen Molekulargewichtreglers erhaltenen endständig hydroxyfunktionelle Polymethacrylsäureestern mit Diolen unter Zusatz von an sich bekannten nichtbasischen Umesterungskatalysatoren in einem molaren Verhältnis von Polymethacrylsäureester zu Diol von 1:1 bis 1:10 erhalten werden.
Beispiel für bevorzugte Monomereinheiten, die die Polymethacrylatsequenz der endständig hydroxyfunktionellen Polymethacrylatdiole bilden, sind: Methylmethacrylat, Ethylmethacrylat, Propylmethacrylat, n-Butylmethacrylat, iso-Butylmethacrylat, tert.-Butylmethacrylat, n-Pentylmethacrylat, Amylmethacrylat, n-Heacylmethacrylat, n-Octylmethacrylat, 2-Ethylhexylmethacrylat, n-Decylmethacrylat, Cyclopentylmethacrylat, Cyclohexylmethacrylat, 4-tert.-Butylcyclohexylmethacrylat, Cyclooctylmethacrylat, Phenylmethacrylat, Isobornylmethacrylat oder andere (Meth)acrylate mit (ar)alicyclischen Esterresten oder deren Gemische. Beispielhaft als für die Umesterungsreaktion zu den Polymethacrylatdiolen geeignete Diole sind: Ethylenglykol, Propandiol-1,2 und -1,3, Butandiol-1,2, -1,3 und -1,4, Neopentylglykol, Hexandiol-1,6, Octandiol-1,8, Decandiol-1,10, Dodecandiol-1,12, Cyclopentandiol-1,2, Cyclohexandiol-1,2 und -1,4, Diethylenglykol, Triethylenglykol, Polyethylenglykol, Polypropylenglykol, Polybutylenglykol, Polyoxyethylen-Polyoxypropylen-Diole, Buten-2,3-diol-1,4, 1,2- und 1,4-Dihydroxymethylbenzol.

Neben den alpha, omega-Polymethacrylatdiolen (A) können im erfindungsgemäßen Polyurethanharz PUR alle bei der Herstellung von Beschichtungsmitteln auf Polyurethanbasis geeigneten Ausgangsstoffe, wie beispielsweise Polyole, Isocyanate, Kettenverlängerungsmittel, reaktive zur Salzbildung befähigte Komponenten sowie weitere Hilfsstoffe, eingesetzt werden. Solche Ausgangsstoffe sind bekannt, und beispielsweise in den folgenden Schriften beschrieben: DE-A-26 24 442, DE-A-32 10 051, EP-A-0 355 433, DE-A-35 45 618, DE-A-38 13 866, DE-A-40 05 961 , DE-A-41 10 520 und DE-A-40 13 546. Wegen Beispielen für geeignete Aufbaukomponenten der Polyurethanharze PUR sei daher auf diese Schriften verwiesen.
Die neben den alpha,omega-Polymethacrylatdiolen (A) zur Herstellung der Polyurethanharze (PUR) eingesetzten Di- und/oder Polyole (D1) können niedermolekular und/oder hochmolekular sein.
Um die Härte der Polyurethanharze PUR zu erhöhen, kann man niedermolekulare Di- und/oder Polyole (D1) einsetzen. Sie haben ein Molekulargewicht von 60 bis zu etwa 400 Dalton und können aliphatische, cycloaliphatische, araliphatische und/oder aromatische Gruppen enthalten.
Um ein Polyurethanharz PUR hoher Flexibilität zu erhalten, können gesättigte und/oder ungesättigte Polyesterdi- und/oder -polyole (D1) und/oder Polyetherdi- und/oder - polyole (D1) mit einem zahlenmittleren Molekulargewicht Mn von 400 bis 5000 Dalton eingesetzt werden. Polyesterdiole (D1) werden durch veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole (D1) herzustellen, können in geringem Umfang Polyole oder Polycarbonsäuren mit einer höheren Wertigkeit eingesetzt werden. Bevorzugt werden lineare Polyesterdiole (D1) eingesetzt.
Als Beispiele für Polyetherpolyole (D1) seien Polyoxyalkylenpolyole, insbesondere Polyoxypropylenglykole mit einem zahlenmittleren Molekulargewicht Mn von 300 bis 3000 Dalton, genannt.
Es können als Polyolkomponente (D1) auch Polyesterpolyole eingesetzt werden, deren Säurekomponente zumindest zum Teil aus dimeren Fettsäuren besteht. Derartige Systeme sind beispielsweise in der US-PS 4 423 179 beschrieben.
Weiterhin können als Polyolkomponente (D1) beispielsweise eingesetzt werden: Polylactondiole und/oder -polyole, alkydmodifizierte Polyesterdiole und/oder -polyole, Polycarbonatdiole und/oder -polyole sowie Polyolefindiole und/oder - polyole.

Als typische multifunktionelle Isocyanate (B) werden bei der Herstellung der erfindungsgemäßen Polyurethanharze PUR aliphatische, cycloaliphatische und/oder aromatische Polyisocyanate mit mindestens 2 Isocyanatgruppen pro Molekül verwendet. Aufgrund ihrer guten Beständigkeit gegenüber ultraviolettem Licht ergeben (cyclo)aliphatische Diisocyanate (B) Produkte mit geringer Vergilbungsneigung.
Die zur Bildung der Polyurethanharze PUR benötigte Polyisocyanatkomponente (B) kann auch einen Anteil höherwertiger Polyisocyanate enthalten, vorausgesetzt, dadurch wird keine Gelbildung verursacht. Als Triisocyanate (B) haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.
Zur Herstellung festkörperreicher Polyurethanharzlösungen werden insbesondere Diisocyanate (B) der allgemeinen Formel (1): 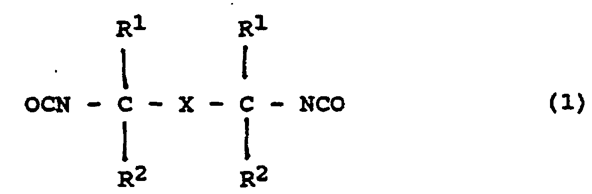 eingesetzt, wobei X für einen zweiwertigen, aromatischen Kohlenwasserstoffrest, vorzugsweise für einen gegebenenfalls Halogen-, Methyl- oder Methoxysubstituierten Naphthylen-, Diphenylen- oder 1,2- , 1,3- oder 1,4-Phenylenrest, besonders bevorzugt für einen 1,3-Phenylenrest und R₁ und R₂ für gegebenenfalls verschiedene Alkylreste mit 1 bis 4 Kohlenstoffatomen, besonders bevorzugt für einen Methylrest, stehen.
Diisocyanate der Formel (1) sind bekannt (ihre Herstellung wird beispielsweise in der EP-A-0 101 832, US-PS 3,290,350, US-PS 4,130,577 und der US-PS 4,439,616 beschrieben) und sind zum Teil im Handel erhältlich (1,3-Bis(2-isocyanatoprop-2-yl)benzol wird beispielsweise von der American Cyanamid Company unter dem Handelsnamen TMXDI (META)® verkauft).
Zusätzlich zu den Diisocyanaten (B) der Formel (1) oder stattdessen können auch noch andere aliphatische und/oder cycloaliphatische und/oder aromatische Polyisocyanate (B) eingesetzt werden. Als Beispiele für zusätzlich einsetzbare Polyisocyanate (B) werden 1,3- und 1,4-Phenylendiisocyanat, 2,4- und 2,6-Toluylendiisocyanat, Xylylendiisocyanat, 4,4'-Bisphenylendiisocyanat, 1,4- und 1,5-Naphthylendiisocyanat, Diphenylmethandiisocyanat, Isophorondiisocyanat, Cyclopentylendiisocyanat, Cyclohexylendiisocyanat, Methylcyclohexylendiisocyanat, Dicyclohexylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Weiterhin bevorzugt als Diisocyanatkomponente (B) sind Diisocyanate der Formel (2) : 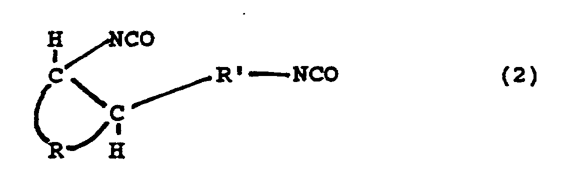 mit:
R für einen zweiwertigen Alkyl- oder Aralkylrest mit 3 bis 20 Kohlenstoffatomen und
R' für einen zweiwertigen Alkyl- oder Aralkylrest mit 1 bis 20 Kohlenstoffatomen.

Die Polyurethanharze PUR sind im allgemeinen nicht mit Wasser verträglich, wenn nicht bei ihrer Synthese spezielle Bestandteile eingebaut und/oder besondere Herstellungsschritte vorgenommen werden. So können zur Herstellung der bevorzugten wasserverträglichen Polyurethanharze PUR Verbindungen (C) verwendet werden, die zwei mit Isocyanatgruppen reagierende Wasserstoff-aktive Gruppen und mindestens eine Gruppe enthalten, die die Wasserdispergierbarkeit gewährleistet (Trägergruppen). Geeignete Trägergruppen sind nichtionische Gruppen (z.B. Polyether), anionische Gruppen, Gemische dieser beiden Gruppen oder kationische Gruppen.
So kann eine so große Säurezahl in das Polyurethanharz PUR eingebaut werden, daß das neutralisierte Produkt stabil in Wasser zu dispergieren ist. Hierzu dient die Komponente (C), umfassend Verbindungen, die zwei mit Isocyanatgruppen reagierende Wasserstoff-aktive Gruppen und mindestens eine zur Anionbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats (B) vorzugsweise mit den anderen gegenüber Isocyanatgruppen reaktiven Gruppen des Moleküls reagieren. Es werden dazu bevorzugt Alkansäuren mit 2 Substituenten am alpha-ständigen Kohlenstoffatom eingesetzt. Der Substituent kann eine Hydroxylgruppe oder eine Alkylolgruppe sein. Diese Polyole (C) haben wenigstens eine, im allgemeinen 1 bis 3 Carboxylgruppen im Molekül. Sie haben 2 bis etwa 25, vorzugsweise 3 bis 10 Kohlenstoffatome. Das carboxylgruppenenthaltende Polyol (C) kann 0 bis 25 Gew.-%, vorzugsweise 0 bis 15 Gew.-%, des gesamten Polyol-Bestandteils im Polyurethanharz PUR ausmachen. Die durch die Carboxylgruppenneutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxyalkansäuren (C) im unneutralisierten Polyurethanharz PUR ergibt eine Säurezahl von wenigstens 5, vorzugsweise wenigstens 10. Bei sehr niedrigen Säurezahlen sind im allgemeinen weitere Maßnahmen zur Erzielung der Wasserdispergierbarkeit erforderlich. Die obere Grenze der Säurezahl liegt bei 70, vorzugsweise bei 40 mg KOH/g, bezogen auf den Feststoff. Bevorzugt liegt die Säurezahl im Bereich von 20 bis 30 mg KOH/g. Als Komponente (C), die mindestens 2 mit Isocyanatgruppen reagierende Gruppen und mindestens eine zur Anionenbildung befähigte Gruppe enthält, geeignet sind beispielsweise Dihydroxypropionsäure, Dimethylolpropionsäure, Dihydroxybernsteinsäure oder Dihydroxybenzoesäure. Geeignet sind auch die durch Oxidation von Monosacharin zugänglichen Polyhydroxysäuren, zum Beispiel Glykolsäure, Zuckersäure, Schleimsäure, Glykuronsäure und dergleichen.
Aminogruppenhaltige Verbindungen (C) sind beispielsweise alpha,delta-Diaminovaleriansäure, 3,4-Diaminobenzoesäure, 2,4-Diamino-toluolsulfonsäure-5, 4,4'-Diamino-diphenylethersulfonsäure und dergleichen.

In einer weiteren Ausführungsform der Erfindung werden in einer zweiten Stufe die gegebenenfalls noch vorhandenen Isocyanatgruppen des Polyurethanharzes PUR mit einem Modifizierungsmittel (D) umgesetzt. Diese Reaktion führt insbesondere zu einer weiteren Erhöhung des Molekulargewichts des Polyurethanharzes PUR. Die Menge dieses Modifizierungsmittels (D) wird durch seine Funktionalität und den Isocyanat-Gehalt des Polyurethan-Präpolymeren bestimmt. Das Äquivalentverhältnis der aktiven Wasserstoffatome im Modifizierungsmittel (D) zu den Isocyanatgruppen im Präpolymer sollte in der Regel geringer als 4:1 sein und vorzugsweise im Bereich zwischen 3:1 und 2:1 liegen.
Bevorzugt werden als Modifizierungsmittel (D) für die Umsetzung mit dem Polyurethan-Präpolymer Di-, besonders bevorzugt Tri- und/oder Polyole (D1) eingesetzt.
Es können aber auch andere Verbindungen mit aktiven Wasserstoffatomen als Modifizierungsmittel (D) eingesetzt werden, beispielsweise Polyamine (D2), allerdings nur unter der voraussetzung, daß die Umsetzung des Polyurethan-Präpolymers mit dem Modifizierungsmittel (D) im organischen Lösemittel durchführbar (kontrollierbar) ist und bei dieser Reaktion keine unerwünschten Reaktionen, wie zum Beispiel die beim Einsatz von Polyaminen häufig beobachtete Gelierung an der Eintropfstelle des Amins, auftreten.
Als Beispiel für mindestens 3 Hydroxylgruppen enthaltende Polyole (D1) seien Trimethylolpropan, Glycerin, Diglycerin, 1,2,4-Butantriol, Erythrit, Mesoerythrit, Arabit, Adonit, und andere genannt. Bevorzugt wird Trimethylolpropan eingesetzt. Die Umsetzung des Präpolymers mit dem Tri- und/oder Polyol (D1) wird vorzugsweise durch die Stöchiometrie der eingesetzten Verbindungen so gesteuert, daß es zur Kettenverlängerung kommt.

Sobald das Polyurethanharz PUR das gewünschte Molekulargewicht erreicht hat, welches vorzugsweise indirekt anhand der Viskosität der Lösung des Polyurethanharzes PUR im Lösemittel bestimmt wird, wird in einer bevorzugten Ausführungsform der Erfindung die Reaktion durch Zugabe einer zusätzlichen Komponente (E) mit einem aktiven Wasserstoffatom abgebrochen, indem die gegebenenfalls noch anwesenden Isocyanatgruppen im Polyurethanharz PUR mit dieser Komponente (E) umgesetzt werden.
Vorzugsweise ist die Komponente (E) eine Verbindung mit einer Hydroxylgruppe, die zur vollständigen Umsetzung der gegebenenfalls noch anwesenden Isocyanatgruppen verwendet wird. Beispielhaft für solche hydroxylgruppenhaltigen Komponenten (E) seien genannt: Monoalkohole, wie Ethanol, n-Propanol, iso-Propanol oder vorzugsweise n-Butanol, oder Polyethermonoalkohole, wie Polyethylenglykol- oder Polypropylenglykolmonoalkylether.

Die mittels des erfindungsgemäßen Verfahrens hergestellten Polyurethanharze PUR weisen üblicherweise ein zahlenmittleres Molekulargewicht Mn von 1.000 bis 30.000 Dalton, bevorzugt von 1.500 bis 20.000 Dalton (bestimmt jeweils gelpermeationschromatographisch mit Polystyrol als Standard), sowie gegebenenfalls eine Hydroxylzahl von 20 bis 200 mg KOH/g, bevorzugt von 25 bis 150 mg KOH/g, und gegebenenfalls eine Säurezahl von 5 bis 150 mg KOH/g, bevorzugt 10 bis 100 mg KOH/g, auf.

Bei den bevorzugten wasserverträglichen Polyurethanharzen PUR werden im Anschluß an die Herstellung des Polyurethanharzes PUR in organischer Lösung zur Überführung der Säurein die Säureaniongruppen Neutralisationsmittel zugegeben. Die Neutralisation kann in der wäßrigen Phase nach der Dispergierung des Polyurethanharzes PUR oder bevorzugt in der organischen Lösung des Polyurethanharzes PUR vor dessen Dispergierung in der wäßrigen Phase durchgeführt werden. Bevorzugt als Neutralisationsmittel sind Basen, die keine aktiven Wasserstoffatome aufweisen, wie beispielsweise tertiäre Amine.
Geeignete tertiäre Amine zur Neutralisation der anionischen Gruppen sind beispielsweise Trimethylamin, Triethylamin, Dimethylanilin, Diethylanilin, Triphenylamin, Dimethylethanolamin und dergleichen. Bevorzugt werden Trimethylamin und/oder Dimethylethanolamin eingesetzt.
Die Lösung des Polyurethanharzes PUR wird zur Herstellung der Polyurethanharz-Dispersion mit Wasser gemischt, im welchem gegebenenfalls das oben angeführte Neutralisationsmittel enthalten ist.
Im allgemein ist die Menge des Wassers so bemessen, daß die Polyurethanharz-Dispersionen einen Feststoffgehalt von bis zu 60 Gew.-%, vorzugsweise von 10 bis 60 Gew.-%, besonders vorzugsweise von 10 bis 50 Gew.-%, bezogen auf die Dispersion. Der mittlere Teilchendurchmesser der dispergierten Polyurethanharz-Teilchen liegt im allgemeinen unter 1 Mikrometer, bevorzugt zwischen 10 und 500 Nanometer. Bei sehr niedrigem Gehalt an hydrophilen Gruppen können auch mittlere Teilchendurchmesser zwischen ca. 5 und 50 Mikrometer erhalten werden.

Die erfindungsgemäßen Polyurethanharze PUR weisen bevorzugt folgende Zusammensetzung der Komponenten (A) bis (E) auf:
1 bis 80 Gew.-%, besonders bevorzugt 5 bis 65 Gew.-% der Komponente (A),
1 bis 55 Gew.-%, besonders bevorzugt 5 bis 35 Gew.-%, der Komponente (B),
0 bis 25 Gew.-%, besonders bevorzugt 0 bis 15 Gew.-% der Komponente (C),
0 bis 25 Gew.-%, besonders bevorzugt 0 bis 15 Gew.-%, der Komponente (D), sowie
0 bis 50 Gew.-%, besonders bevorzugt 0 bis 20 Gew.-%, der Komponente (E),
wobei die Summe der Komponenten (A) bis (E) 100 Gew.-% des Polyurethanharzes PUR ausmacht.

### Die weiteren Bindemittelkomponenten

Neben den erfindungsgemäßen Polyurethanharzen PUR enthalten die Beschichtungsmittel als weitere Bindemittelkomponenten mindestens ein Polyacrylatharz PAC und/oder mindestens ein Polyesterharz PES, die bevorzugt in wasserverträglicher Form vorliegen.

Bevorzugt werden als Polyacrylatharz-Bindemittelkomponente PAC Acrylatcopolymerisate gemäß DE-A-44 21 823 eingesetzt, die erhältlich sind durch Polymerisation in einem organischen Lösemittel oder einem Lösemittelgemisch und in Gegenwart mindestens eines Polymerisationsinitiators von
a1) einem von (a2), (a3), (a4), (a5) und (a6) verschiedehen, mit (a2), (a3), (a4), (a5) und (a6) copolymerisierbaren, im wesentlichen carboxylgruppenfreien (Meth) acrylsäureester oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und im wesentlichen carboxylgruppenfrei ist, oder einem Gemisch aus solchen Monomeren,
a3) einem mindestens eine Carboxylgruppe pro Molekül tragenden, mit (a1), (a2), (a4), (a5) und (a6) copolymerisierbaren, ethylenisch ungesättigten Monomer oder einem Gemisch aus solchen Monomeren und
a4) gegebenenfalls einem oder mehreren Vinylestern von in alpha-Stellung verzweigten Monocarbonsäuren mit 5 bis 18 C-Atomen je Molekül und/oder
a5) gegebenenfalls mindestens einem Umsetzungsprodukt aus Acrylsäure und/oder Methacrylsäure mit dem Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls einem mit (a1), (a2), (a3), (a4), und (a5) copolymerisierbaren, von (a1), (a2), (a4) und (a5) verschiedenen, im wesentlichen carboxylgruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz PAC die gewünschte OH-Zahl, Säurezahl und das gewünschte Molekulargewicht aufweist.

Weiterhin bevorzugt sind vorzugsweise wasserverträgliche hydroxyl- und carboxylgruppenhaltige Polyester PES, beispielsweise gemäß DE-A-44 21 823, mit den angegebenen OH-Zahlen, Säurezahlen und Molekularzahlen.
Bevorzugt werden Polyester PES eingesetzt, die erhältlich sind durch Umsetzung von
p1) Polycarbonsäuren oder deren veresterungsfähigen Derivaten, gegebenenfalls zusammen mit Monocarbonsäuren,
p2) Polyolen, gegebenenfalls zusammen mit Monoolen,
p3) gegebenenfalls weiteren modifizierenden Komponenten und
p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt.
Bevorzugt werden als Komponente (p1) aromatische und/oder aliphatische Polycarbonsäuren eingesetzt. Beispiele für geeignete Polycarbonsäuren (p1) sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-Cyclohexandicarbonsäure, 1,3-Cyclohexandicarbonsäure, 1,4-Cyclohexandicarbonsäure, 4-Methylhexahydrophthalsäure, Endomethylentetrahydrophthalsäure, Tricyclodecan-Dicarbonsäure, Endoethylenhexahydrophthalsäure, Camphersäure, Cyclohexantetracarbonsäure, Cyclobutantetracarbonsäure und andere. Die cycloaliphatischen Polycarbonsäuren (p1) können sowohl in ihrer cis- als auch in ihrer trans-Form sowie als Gemisch beider Formen eingesetzt werden. Geeignet sind auch die veresterungsfähigen Derivate der obengenannten Polycarbonsäuren (p1), wie z.B. deren ein- oder mehrwertige Ester mit aliphatischen Alkoholen mit 1 bis 4-C-Atomen oder Hydroxyalkoholen mit 1 bis 4 C-Atomen. Außerdem können auch die Anhydride der obengenannten Säuren eingesetzt werden, sofern sie existieren.

Gegebenenfalls können zusammen mit den Polycarbonsäuren (p1) auch Monocarbonsäuren eingesetzt werden, wie beispielsweise Benzoesäure, tert. Butylbenzoesäure, Laurinsäure, Isononansäure und Fettsäuren natürlich vorkommender öle. Bevorzugt wird als Monocarbonsäure Isononansäure eingesetzt.

Geeignete Alkoholkomponenten (p2) zur Herstellung des Polyesters PES sind mehrwertige Alkohole, wie Ethylenglykol, Propandiole, Butandiole, Hexandiole, Hydroxypivalinsäureneopentylester, Neopentylglykol, Diethylenglykol, Cyclohexandiol, Cyclohexandimethanol, Trimethylpentandiol, Ethylbutylpropandiol, Ditrimethylolpropan, Trimethylolethan, Trimethylolpropan, Glycerin, Pentaerythrit, Dipentaerythrit, Trishydroxyethylisocyanat, Polyethylenglykol, Polypropylenglykol, gegebenenfalls zusammen mit einwertigen Alkoholen, wie beispielsweise Butanol, Octanol, Laurylalkohol, ethoxylierten bzw. propoxylierten Phenolen.
In einer bevorzugten Ausführungform der Erfindung enthalten die Polyester PES als Alkobolkomponente (p2) die oben beschriebenen alpha,omega-Polymethacrylatdiole in Mengen von bis zu 100 Gew.-%, bezogen auf (p2).

Als Komponente (p3) zur Herstellung der Polyester PES geeignet sind insbesondere Verbindungen, die eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxidverbindungen, gegebenenfalls auch Monoisocyanate und/oder Monoepoxidverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester PES geeignet sind Verbindungen, die außer einer gegenüber den funktionellen Gruppen des Polyesters reaktiven Gruppe noch eine tertiäre Aminogruppe aufweisen, beispielsweise Monoisocyanate mit mindestens einer tertiären Aminogruppe oder Mercaptoverbindungen mit mindestens einer tertiären Aminogruppe. Wegen Einzelheiten wird auf die DE-A-40 24 204, Seite 4, Zeilen 10 bis 49, verwiesen.

Es ist weiterhin möglich, daß das Polyacrylatharz PAC zumindest teilweise in Gegenwart des Polyesters PES hergestellt worden ist. Vorteilhafterweise werden in diesem Fall mindestens 20 Gew.-% und besonders vorteilhafterweise 40 bis 80 Gew.-% der Komponente PAC in Gegenwart der Komponente PES hergestellt.Die gegebenenfalls restliche Menge der Komponente PAC wird der Bindemittellösung anschließend zugegeben. Dabei ist es möglich, daß dieses bereits polymerisierte Harz die gleiche Monomerzusammensetzung aufweist wie das in Gegenwart des Polyesters PES aufgebaute Polyacrylatharz PAC. Es kann aber auch ein hydroxylgruppenhaltiges Polyacrylatharz PAC mit einer unterschiedlichen Monomerzusammensetzung zugefügt werden.

Als weitere Bindemittelkomponenten geeignet sind alle mit den übrigen Bindemitteln verträglichen, bevorzugt wasserverdünnbaren Bindemittel, beispielsweise acrylierte Polyurethanharze und/oder Polyesteracrylate.

### Die Beschichtungsmittel

In einer Ausführungsform der Erfindung sind die erfindungsgemäßen Beschichtungsmittel physikalisch trocknende einkomponentige Systeme (Komponente (I)), enthaltend das erfindungsgemäße Polyurethanharz PUR sowie als weitere Bindemittel mindestens ein Polyacrylatharz PAC und/oder mindestens ein Polyesterharz PES, organische Lösemittel und/oder Wasser, gegebenenfalls Pigmente, gegebenenfalls Neutralisationsmittel, gegebenenfalls rheologiesteuernde Additive sowie gegebenenfalls weitere lackübliche Additive.

Dabei können die Beschichtungsmittel auf organischer Basis (Lösemittelbasis) und/oder auf wäßriger Basis aufgebaut sein.

Bevorzugt werden zur Herstellung der erfindungsgemäßen Beschichtungsmittel Komponenten (I) eingesetzt, die aus
(I1) 20 bis 90 Gew.-%, bevorzugt 35 bis 80 Gew.-%, des Bindemittels (I1), enthaltend (im Falle der mehrkomponentigen Beschichtungsmittel gegebenenfalls) das erfindungsgemäße Polyurethanharz PUR,
(I2) 0 bis 60 Gew.-%, bevorzugt 5 bis 50 Gew.-%, mindestens eines Pigments und/oder Füllstoffs (I2),
(I3) 5 bis 50 Gew.-%, bevorzugt 10 bis 40 Gew.-%, mindestens eines organischen, vorzugsweise wasserverdünnbaren Lösemittels (I31) und/oder Wasser (I32),
(I4) 0 bis 20 Gew.-%, bevorzugt 0 bis 10 Gew.-%, mindestens eines gegebenenfalls wäßrigen Neutralisationsmittels (I4),
(I5) 0 bis 5 Gew.-%, bevorzugt 0 bis 3 Gew.-%, mindestens eines gegebenenfalls wäßrigen rheologiesteuernden Additivs (I5) und
(I6) 0 bis 20 Gew.-%, bevorzugt 2 bis 10 Gew.-%, mindestens eines üblichen Lackadditivs
bestehen, wobei die Summe der Gewichtsanteile der Komponenten (I1) bis (I6) jeweils 100 Gew.-%, bezogen auf die Komponente (I), beträgt.

Dabei enthält die Komponente (I) bevorzugt als Bindemittel (I1):
(I11) 5 bis 100 Gew.-% (im Falle der mehrkomponentigen Beschichtungsmittel 0 bis 100 Gew.-%), bevorzugt 10 bis 90 Gew.-% (im Falle der mehrkomponentigen Beschichtungsmittel 0 bis 90 Gew.-%) des erfindungsgemäßen Polyurethanharzes PUR,
(I12) 0 bis 95 Gew.-%, vorzugsweise 5 bis 85 Gew.-% eines Polyacrylats PAC,
(I13) 0 bis 30 Gew.-%, bevorzugt 5 bis 20 Gew.-% mindestens eines Polyesters PES, und
(I14) 0 bis 50 Gew.-%, bevorzugt 0 bis 40 Gew.-% mindestens eines weiteren Bindemittels,
wobei die Summe der Gewichtsanteile der Komponenten (I11) bis (I14) 100 Gew.-% des Bindemittels (I1) ausmacht und wobei zumindest eine der Komponenten (I12) oder (I13) mitverwendet wird (im Falle der mehrkomponentigen Beschichtungsmittel genügt es, wenn entweder in Komponente (I) oder in Komponente (III) zumindest eine der Komponenten (I12) oder (I13) verwendet wird).

Die Komponente (I) kann als Bestandteil (I2) alle lacküblichen Pigmente enthalten. Dabei können sowohl die in wäßrigen Beschichtungsmitteln üblichen Pigmente, die mit Wasser nicht reagieren beziehungsweise sich in Wasser nicht lösen, als auch die üblicherweise in konventionellen Beschichtungsmitteln eingesetzten Pigmente eingesetzt werden. Die Pigmente können aus anorganischen oder organischen Verbindungen bestehen und können effekt- und/oder farbgebend sein. Das erfindungsgemäße Beschichtungsmittel gewährleistet daher aufgrund dieser Vielzahl geeigneter Pigmente eine universelle Einsatzbreite der Beschichtungsmittel und ermöglicht die Realisierung einer Vielzahl von Farbtönen.
Als Effektpigmente können Metallplättchenpigmente, wie handelsübliche Aluminiumbronzen, gemäß DE-A-36 36 183 chromatierte Aluminiumbronzen, und handelsübliche Edelstahlbronzen sowie nicht metallische Effektpigmente, wie zum Beispiel Perlglanz- bzw. Interferenzpigmente, eingesetzt werden.

Beispiele für geeignete anorganische farbgebende Pigmente sind Titandioxid, Eisenoxide, Sicotransgelb und Ruß. Beispiele für geeignete organische farbgebende Pigmente sind Indanthrenblau, Cromophthalrot, Irgazinorange und Heliogengrün.

Als Bestandteil (I3) enthält die Komponente (I) mindestens ein organisches, vorzugsweise wasserverdünnbares Lösemittel und gegebenenfalls weitere Lösemittel (I31) und/oder Wasser (I32).
Beispiele für geeignete Lösemittel sind insbesondere wassermischbare Lösemittel, wie z.B. Alkohole, Ester, Ketone, Ketoester, Glykoletherester und ähnliche. Bevorzugt eingesetzt werden Ester, Alkohole und Glykolether, besonders bevorzugt Ethoxyethylpropionat und Isopropoxypropanol.

Als Bestandteil (I4) enthält die Komponente (I) gegebenenfalls mindestens ein gegebenenfalls wäßriges Neutralisationsmittel. Beispiele für geeignete Neutralisationsmittel sind Ammoniak und Amine, wie z.B. Trimethylamin, Triethylamin, Tributylamin, Dimethylanilin, Diethylanilin, Triphenylamin, Dimethylethanolamin, Diethylethanolamin, Methyldiethanolamin, Triethanolamin und dergleichen. Die Neutralisation kann in organischer Phase oder in wäßriger Phase erfolgten. Bevorzugt wird als Neutralisationsmittel Dimethylethanolamin eingesetzt.

In den erfindungsgemäßen Beschichtungsmitteln kann die Komponente (I) mindestens ein rheologiesteuerndes Additiv als Bestandteil (I5) enthalten. Als Beispiele für rheologiesteuernde Additive werden genannt: vernetzte polymere Mikroteilchen, wie sie beispielsweise in der EP-A-0 038 127 offenbart sind, anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs, sowie synthetische Polymere mit ionischen und/oder assoziativ wirkenden Gruppen, wie Polyvinylalkohol, Poly(meth) acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxylierte Urethane oder Polyacrylate. Bevorzugt werden als rheologiesteuernde Additive anorganische Schichtsilikate eingesetzt.

Die Komponente (I) kann außerdem mindestens noch weitere übliche Lackadditive als Komponente (I6)enthalten. Beispiele für derartige Additive sind Entschäumer, Dispergierhilfsmittel, Emulgatoren, und Verlaufshilfsmittel.

In einer bevorzugten Ausführungform der Erfindung besteht das erfindungsgemäße Beschichtungsmittel aus der Komponente (I) und/oder einer wäßrigen Komponente (III), wobei das erfindungsgemäße Polyurethanharz PUR in Komponente (I) und/oder in Komponente (III) enthalten ist, gegebenenfalls aus einer Vernetzer-Komponente (II) und gegebenenfalls einer weiteren Komponente (IV).

Bevorzugt werden zur Herstellung der erfindungsgemäßen Beschichtungsmittel Komponenten (II) eingesetzt, die aus
(II1) 50 bis 100 Gew.-%, bevorzugt 60 bis 90 Gew.-%, mindestens eines Vernetzungsmittels (II1),
(II2) 0 bis 50 Gew.-%, bevorzugt 10 bis 40 Gew.-%, mindestens eines organischen, vorzugsweise wassermischbaren Lösemittels (II2) und
(II3) 0 bis 20 Gew.-%, bevorzugt 0 bis 10 Gew.-% mindestens eines üblichen Hilfs- und/oder Zusatzstoffes (II3), bestehen, wobei die Summe der Gewichtsanteile der Komponenten (II1) bis (II3) jeweils 100 Gew.-%, bezogen auf (II), beträgt.

Die Komponente (II) enthält als Vernetzungsmittel (II1) mindestens ein gegebenenfalls in einem oder mehreren organischen, wasserverdünnbaren Lösemitteln gelöstes oder dispergiertes, vorzugsweise nichtblockiertes Di- und/oder Polyisocyanat (II11) sowie gegebenenfalls mindestens ein weiteres Vernetzungsmittel, ausgewählt aus mindestens einer Epoxidverbindung (II12) mit mindestens zwei Epoxidgruppen pro Molekül und/oder mindestens einem Aminoplastharz (II13), enthält.

Bei der Polyisocyanatkomponente (II11) handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate (II11) mit 2 bis 5 Isocyanatgruppen pro Molekül und mit Viskositäten von 100 bis 2000 mPas (bei 23 Grad C) eingesetzt. Gegebenenfalls können den Polyisocyanaten (II11) noch geringe Mengen organisches Lösemittel, bevorzugt 1 bis 25 Gew.-%, bezogen auf das reine Polyisocyanat, zugegeben werden, um so die Einarbeitbarkeit des Isocyanates zu verbessern und gegebenenfalls die Viskosität des Polyisocyanates auf einen Wert innerhalb der obengenannten Bereiche abzusenken. Als Zusatzmittel geeignete Lösemittel für die Polyisocyanate (II11) sind beispielsweise Ethoxyethylpropionat, Butylacetat und ähnliche.
Beispiele für geeignete Isocyanate (II11) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind die bei der Beschreibung der erfindungsgemäßen Polyurethanharze PUR genannten Isocyanate.

Es können auch Isocyanuratgruppen und/oder Biuretgruppen und/oder Allophanatgruppen und/oder Urethangruppen und/oder Harnstoffgruppen aufweisende Polyisocyanate (II11) eingesetzt werden. Urethangruppen aufweisende Polyisocyanate (II11) werden beispielsweise durch Umsetzung eines Teils der Isocyanatgruppen mit Polyolen, wie z.B. Trimethylolpropan und Glycerin, erhalten.
Vorzugsweise werden aliphatische oder cycloaliphatische Polyisocyanate (II11), insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten (II11) auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (II11) kann im übrigen auch aus beliebigen Gemischen der beispielhaft genannten Polyisocyanate bestehen.
Die Polyisocyanatkomponente (II11) wird vorteilhafterweise in einer Menge von mindestens 70 Gew.-%, besonders bevorzugt in einer Menge von 80 bis 100 Gew.-%, bezogen auf das Gesamtgewicht des Vernetzungsmittels (II1), eingesetzt.

Beispiele für geeignete Polyepoxide (II12) sind alle bekannten aliphatischen und/oder cycloaliphatischen und/oder aromatischen Polyepoxide, beispielsweise auf Basis Bisphenol-A oder Bisphenol-F.
Als Komponente (II12) geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol® EX-411 (Pentaerythritpolyglycidylether), Denacol® EX-321 (Trimethylolpropanpolyglycidylether), Denacol® EX-512 (Polyglycerolpolyglycidylether) und Denacol® EX-521 (Polyglycerolpolyglycidylether). Die Polyepoxidkomponente (II12) wird in den erfindungsgemäßen Beschichtungsmitteln vorteilhafterweise in einer Menge von 0 bis 30 Gew.-%, besonders bevorzugt in einer Menge von 0 bis 20 Gew.-%, bezogen auf das Gesamtgewicht des Vernetzungsmittels (III), eingesetzt.

Beispiele für geeignete Aminoplastharze (II13) sind iminofunktionelle Melaminharze, wie die im Handel unter dem Namen Cymel® 325 der Firma Cyanamid und Luwipal® LR 8839 der Firma BASF AG erhältlichen Produkte.
Das Aminoplastharz (II13) wird in den erfindungsgemäßen Beschichtungsmitteln vorteilhafterweise in einer Menge von 0 bis 30 Gew.-%, besonders bevorzugt in einer Menge von 0 bis 20 Gew.-%, bezogen auf das Gesamtgewicht des Vernetzungsmittels (II1), eingesetzt.

In einer weiteren bevorzugten Ausführungsform der Erfindung wird zur Herstellung der erfindungsgemäßen Beschichtungsmittel eine Komponente (III) eingesetzt, die aus
(III1) 40 bis 100 Gew.-%, bevorzugt 50 bis 95 Gew.-% Wasser,
(III2) 0 bis 50 Gew.-%, bevorzugt 5 bis 45 Gew.-% der Bindemittelkomponente (I1) in wasserdispergierter Form,
(III3) 0 bis 20 Gew.-, bevorzugt 2 bis 10 Gew.-%, mindestens eines gegebenenfalls wäßrigen Neutralisationsmittels (I4),
(III4) 0 bis 20 Gew.-%, bevorzugt 2 bis 10 Gew.-%, mindestens eines üblichen Hilfs- und/oder Zusatzstoffes (III4) und
(III5) 0 bis 20 Gew.-%, bevorzugt 0 bis 10 Gew.-%, mindestens eines Emulsionspolymerisates (III5)
bestehen, wobei die Summe der Gewichtsanteile der Komponenten (III1) bis (III5) jeweils 100 Gew.-%, bezogen auf (III), beträgt.

In einer bevorzugten Ausführungsform der Erfindung wird zur Herstellung der erfindungsgemäßen Beschichtungsmittel eine weitere Komponente (IV) eingesetzt, die aus einem Teil oder der gesamten Menge der in dem Beschichtungsmittel eingesetzten Hilfs- und Zusatzstoffe, gelöst und/oder dispergiert in organischem Lösemittel oder bevorzugt in wäßriger Phase, bestehen.

Bevorzugt werden die Komponenten (I), (II) und (III) zur Herstellung der Beschichtungsmittel in solchen Mengen eingesetzt, daß das Äquivalentverhältnis von Hydroxylgruppen der Bindemittel (I1) und/oder (III2) zu den vernetzenden Gruppen des Vernetzungsmittels (II1) zwischen 1 : 2 und 2 : 1, bevorzugt zwischen 1 : 1,2 und 1 : 1,5, liegt.

Die erfindungsgemäßen Beschichtungsmittel weisen bevorzugt einen Gesamtgehalt an Bindemitteln von 10 bis 50 Gew.-%, bevorzugt von 15 bis 40 Gew.-%, an Vernetzungsmitteln von 0 bis 30 Gew.-%, bevorzugt von 5 bis 20 Gew.-%, an organischen Lösemitteln von 5 bis 60 Gew.-%, bevorzugt von 10 bis 50 Gew.-%, an Wasser von 0 bis 70 Gew.-%, bevorzugt von 25 bis 60 Gew.-%, an Neutralisationsmittel 0 bis 10 Gew.-%, bevorzugt 0 bis 5 Gew.-% an Pigmenten und/oder Füllstoffen von 0 bis 50 Gew.-%, bevorzugt von 0 bis 30 Gew.-%, an Emulsionspolymerisat 0 bis 10 Gew.-%, bevorzugt 0 bis 5 Gew.-%, sowie an üblichen Lackadditiven und Rheologiehilfsmitteln von 0 bis 15 Gew.-%, bevorzugt von 0 bis 10 Gew.-%, auf, jeweils bezogen auf das Gesamtgewicht des Beschichtungsmittels.

Die Herstellung der Komponente (I) erfolgt nach dem Fachmann bekannten Methoden durch Mischen und gegebenenfalls Dispergieren der einzelnen Bestandteile. So erfolgt beispielsweise die Einarbeitung von farbgebenden Pigmenten üblicherweise durch Anreiben (Dispergieren) der jeweiligen Pigmente in einem oder mehreren Bindemitteln. Das Anreiben der Pigmente erfolgt mit Hilfe üblicher Vorrichtungen, wie beispielsweise Perlmühlen und Sandmühlen.
Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der oben beschriebenen Bindemittel, gegebenenfalls unter Zusatz von weiteren organischen Lösemitteln, mittels eines Rührers oder Dissolvers eingerührt.

Die Herstellung der gegebenenfalls anwesenden Komponenten (II), (III) und (IV) erfolgt ebenfalls nach dem Fachmann gut bekannten Methoden durch Mischen bzw. Dispergieren der einzelnen Bestandteile.

In den bevorzugten Ausführungsformen der Erfindung können die Beschichtungsmittel durch alle denkbaren Mischverfahren aus den Komponenten (I), (II), (III) und (IV) hergestellt werden. Dabei können bei der Herstellung der Beschichtungsmittel die Komponenten (I), (II), (III) und (IV) bis zu 6 Monate vor der Applikation der Beschichtungsmittel gemischt und gegebenenfalls dispergiert werden.

So ist es beispielsweise bei der Herstellung der bevorzugten wäßrigen Beschichtungsmittel möglich, zunächst die Komponenten (I) und (II) zu mischen, wobei in diesem Fall bevorzugt diese Komponenten (I) und (II) kein Neutralisationsmittel enthalten. Dann wird zu dieser Mischung gegebenenfalls die wäßrige Komponente (IV) zugesetzt. Entweder wird dann die so erhaltene Mischung in die Neutralisationsmittel enthaltende wäßrige Komponente (III) gegeben und das erhaltene Beschichtungsmittel dispergiert, oder es wird dann in die so erhaltene Mischung die Neutralisationsmittel enthaltende wäßrige Komponente (III) gegeben.
Ferner kann das bevorzugte wäßrige Beschichtungsmittel beispielsweise analog zu dem gerade beschriebenen Verfahren hergestellt werden, wobei allerdings das Neutralisationsmittel nicht in der wäßrigen Komponente (III) enthalten ist, sondern vor der Zugabe der wäßrigen Komponente (III) separat zugegeben wird.

Die erfindungsgemäßen Beschichtungsmittel können durch übliche Applikationsmethoden, wie z.B. Spritzen, Rakeln, Streichen, Tauchen, auf beliebige Substrate, wie z.B. Metall, Holz, Kunststoff oder Papier, aufgebracht werden.

Die erfindungsgemäßen Beschichtungsmittel werden bei Anwesenheit der Komponente (II) üblicherweise bei Temperaturen von unter 160 Grad C, bevorzugt bei Temperaturen von maximal 120 Grad C, gehärtet.
Ist die Vernetzerkomponente (II) nicht anwesend, so können die erfindungsgemäßen Beschichtungmittel als physikalisch trocknende Systeme eingesetzt werden, die gewöhnlich bei Temperaturen oberhalb der Raumtemperatur getrocknet bzw. gehärtet werden.

Die erfindungsgemäßen Beschichtungsmittel werden vorzugsweise zur Herstellung von Decklackierungen eingesetzt. Die erfindungsgemäßen Beschichtungsmittel können sowohl bei der Serien- als auch bei der Reparaturlackierung von Automobilkarosserien eingesetzt werden. Sie werden vorzugsweise aber im Bereich der Reparaturlackierung eingesetzt.

Die erfindungsgemäßen Beschichtungsmittel können als Füller sowie zur Herstellung einschichtiger Decklackierungen sowie bevorzugt als pigmentierte Basislacke oder als Klarlacke in einem Verfahren zur Herstellung einer mehrschichtigen Lackierung eingesetzt werden (Base coat-/Clear coat-Verfahren).

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

### Beispiele:

### Beispiel 1:

### Herstellung der erfindungsgemäßen Polyurethan(PUR)-Bindemittelkomponente (I)

In einem für die Herstellung von Polyurethanharzen geeigneten 41-Stahlreaktor werden 536,7 g Methylethylketon, 12,0 g Neopentylglykol, 73,2 g Dimethylolpropionsäure, 369,2 g m-Tetramethylxylyldiisocyanat und 1554,8 g einer 79,5 %igen Lösung von Polymethylmethacrylatdiol (Tegomer® BD 2000 der Firma Goldschmidt AG) in Methylethylketon vorgelegt und auf eine Reaktionstemperatur von 82 Grad C erhitzt. Die Reaktionstemperatur wird aufrechterhalten bis der Isocyanatgehalt konstant ist.
Anschließend werden 79,7 g Trimethylolpropan zugegeben und, nachdem keine Reaktion mehr auftritt, 830,6 g Butylglykol hinzudosiert. Danach wird das Ethylmethylketon durch Vakuumdestillation entfernt.
Abschließend werden 39,1 g N,N-Dimethylethanolamin zugegeben, 30 Minuten gerührt und anschließend mit Butylglykol auf einen Festkörpergehalt von 59,4 % eingestellt.
Die Bindemittelkomponente (I11) weist eine Säurezahl von 19,9 mg KOH/g und eine Viskosität von 2,5 dPas (10:4 in N-Methylpyrrolidon) auf.

### Beispiel 2: Herstellung und Applikation eines wäßrigen 3-Komponenten-Klarlacks aus den Komponenten (I), (II) und (III)

### 2.1. Herstellung der Komponente (III) enthaltend das erfindungegemäße Bindemittel (I11)

### 2.1.1. Herstellung einer wäßrigen Dispersion der erfindungsgemäßen Polyurethan(PUR)-Bindemittelkomponente (I11) als Bestandteil der Komponente (III2)

In einem für die Herstellung von Polyurethanharzen geeigneten 41-Stahlreaktor werden 405,2 g Methylethylketon, 6,6 g Butylethylpropandiol-1,3 , 69,1 g Dimethylolpropionsäure, 318,0 g m-Tetramethylxylyldiisocyanat und 1044,0 g einer 79,5 %igen Lösung von Polymethylmethacrylatdiol (Tegomer® BD 2000 der Firma Goldschmidt AG) in Methylethylketon vorgelegt und auf eine Reaktionstemperatur von 82 Grad C erhitzt. Die Reaktionstemperatur wird aufrechterhalten bis der Isocyanatgehalt konstant ist.
Anschließend werden 152,4 g Trimethylolpropan zugegeben. Nachdem keine Änderung des Isocyanatgehalts mehr auftritt, werden 36,7 g N,N-Dimethylethanolamin zugesetzt und weitere 30 Minuten gerührt.
Anschließend werden 1300,0 g deionisiertes Wasser zudosiert. Nach Abschluß der Wasserzugabe und Homogenisierung wird das Methylethylketon mittels Vakuumdestillation entfernt und mit deionisiertem Wasser ein Festkörpergehalt von 37 % eingestellt.
Die stippenfreie Dispersion des erfindungsgemäßen Polyurethanharz-Bindemittels (I11) weist eine Säurezahl von ca. 23 mg KOH/g und einen pH-Wert von 7,39 auf. Die Dispersion ist 8 Wochen bei 40 Grad C lagerstabil.

### 2.1.2. vergleichsbeispiel: Herstellung der wäßrigen Dispersion einer nicht erfindungsgemäßen Polyurethan-Bindemittelkomponente (I11') als Bestandteil der Komponente (III2')

### Herstellung der Polyestervorstufe

In einem für Polykondensationsreaktionen geeigneten 41-Stahlreaktor werden 1088,0 g Hydroxypivalinsäureneopentylglykolester, 120,0 g Phthalsäureanhydrid, 1268,0 g Isophthalsäure, 21,0 g 2,2-Butylethylpropandiol-1,3, 489,0 g Neopentylglykol und 113,0 g Xylol eingewogen.
Anschließend wird aufgeheizt und das Kondensationswasser kontinuierlich entfernt bis zu einer Säurezahl von 3,5 mg KOH/g.
Abschließend wird mit Ethylethoxypropionat ein Festkörpergehalt von 79,7 % eingestellt.
Die Säurezahl der Polyestervorstufe beträgt 4,4 mg KOH/g und die Viskosität 3,6 dPas (60 %ig in Ethylethoxypropionat).

### Herstellung des nicht-erfindungsgemäßen Polyurethanharzes III'

In einem für die Herstellung von Polyurethanharzen geeigneten 41-Stahlreaktor werden 749,0 g der Polyestervorstufe, 6,6 g Ethylbutylpropandiol 69,0 g Dimethylolpropionsäure und 318,0 g m-Tetramethylenxylyldiisocyanat vorgelegt.
Die Mischung wird auf eine Reaktionstemperatur von 110 Grad C aufgeheizt und bis zur Konstanz des Isocyanatgehalts gehalten.
Danach werden 101,0 g Trimethylolpropan auf einmal zugegeben und erhitzt bis keine Reaktion mehr auftritt.
Anschließend werden 31,5 g Ethylethoxypropionat zugefügt. Nach 30 Minuten Rühren wird mit 36,7 g N,N-Dimethylethanolamin neutralisiert. Die resultierende Reaktionsmischung wird bei 90 bis 110 Grad C in 1929,2 g warmes Wasser (Wassertemperatur 60 Grad C) eindispergiert.

Die erhaltene Dispersion des nicht erfindungsgemäßen Polyurethanharz-Bindemittels (I11') ist stippenfrei, weist einen Festkörpergehalt von 36,1 %, eine Säurezahl von 30,3 mg KOH/g und einen pH-Wert von 7,1 auf.
Die Dispersion ist bei 40 Grad C länger als 4 Wochen lagerstabil.

### 2.1.3. Herstellung der wäßrigen Dispersion der Polyacrylat(PAC)-Bindemittelkomponente (I12) als Bestandteil der Komponente (III2) bzw (III2')

In einem Stahlkessel, ausgestattet mit Monomerzulauf, Initiatorzulauf, Thermometer, Ölheizung und Rückflußkühler werden 385 Gew.-Teile Ethylethoxypropionat vorgelegt und auf 110 Grad C aufgeheizt. Dann wird eine Lösung von 68 Gew.- Teilen tert.-Butylperoxyethylhexanoat in 159 Gew.-Teilen n-Butanol in einer solchen Geschwindigkeit zugegeben, daß die Zugabe nach 5,5 Stunden abgeschlossen ist. Mit Beginn der Zugabe der tert.-Butylperoxyethylhexanoatlösung wird auch mit der Zugabe der Monomermischung (erster Monomerenzulauf) aus (a1), (a2) und (a6):
(a1): 255 Gew.-Teile n-Butylmethacrylat 197 Gew.-Teile Methylmethacrylat, 113 Gew.-Teile Laurylacrylat (Handelsprodukt Methacrylester 13 der Firma Röhm GmbH, Darmstadt),
(a2): 215 Gew.-Teile Hydroxyethylacrylat und
(a6): 181 Gew.-Teile Styrol
begonnen.

Die Mischung (a1), (a2) und (a6) wird in einer solchen Geschwindigkeit zugegeben, daß die Zugabe nach 5 Stunden abgeschlossen ist.

3,5 Stunden nach Beginn des ersten Monomerenzulaufs wird mit der Zugabe (zweiter Monmerenzulauf) von:
(a2) 113 Gew.-Teilen Hydroxyethylacrylat und
(a3) 58 Gew.-Teilen Acrylsäure
begonnen.

Der zweite Monomerenzulauf ist nach 1,5 Stunden gemeinsam mit dem ersten Monomerenzulauf beendet.

Nach Beendigung der Zugabe der tert.-Butylperoxyethylhexanoatlösung, die 30 Minuten nach Beendigung der Monomerenzuläufe abgeschlossen ist, wird noch 0,3 Gew.-% Initiatorlösung, bezogen auf die im Zulauf eingesetzte Menge, nachdosiert und die Reaktionsmischung noch 2 Stunden bei 120 Grad C gehalten.

Anschließend werden bei 80 Grad C 63 Gew.-Teile N,N-Dimethylethanolamin (Neutralisationsgrad 85 % bezogen auf die eingesetzte Menge an Acrylsäure (a3)) und 1338 Gew.-Teile Wasser zugegeben und 30 Minuten gerührt.
Danach wird das organische Lösemittel wird mittels Destillation unter Vakuum bis auf ≤ 3 % entfernt.
Abschließend wird mit Wasser wird ein Festkörpergehalt von 36,5 % eingestellt.
Der pH-Wert der resultierenden Polyacrylat(PAC)-Dispersion beträgt 6,97 und die Säurezahl 45,6 mg KOH/g.

### 2.1.4 Herstellung der Komponenten (III) bzw. (III'), enthaltend das erfindungsgemäße Polyurethanharz PUR (Komponente (I11)) bzw. das nicht erfindungsgemäße Polyurethanharz (Komponente (I11'))

8,5 Gew.-Teile der wäßrigen Dispersion der erfindungsgemäßen Polyurethanharz-Bindemittelkomponente (I11) gemäß Beispiel 2.1.1. bzw. 8,5 Gew.-Teile der wäßrigen Dispersion der nicht erfindungsgemäßen Polyurethanharz-Bindemittelkomponente (I11') gemäß Beispiel 2.1.2. werden mit 18,5 Gew.-% der wäßrigen Polyacrylat(PAC)-Dispersion ((I12): 35 % Festkörpergehalt) gemäß Beispiel 2.1.3. zur Komponente (III2) bzw. (III2') gemischt.
27,0 Gew-Teile der Komponente (III2) bzw. (III2') werden mit 31,0 Gew.-Teilen Wasser (Komponente (III1)), 0,5 Gew.-Teilen N,N-Dimethylethanolamin (Komponente (III3)) und 2,0 Gew.- Teilen Verdicker (Dapral® T210 der Firma AKZO: Komponente (III4)) gemischt.
Es resultiert die erfindungsgemäße Komponente (III) bzw. die nicht erfindungsgemäße Komponente (III').

### 2.2. Herstellung der Komponente (I'), enthaltend kein erfindungsgemäßes Polyurethanharz PUR

### 2.2.1. Herstellung einer weiteren Polyacrylat(PAC)-Bindemittelkomponente (I12) als Komponente (I1)

In einem 100kg-Stahlkessel, ausgestattet mit Monomerzulauf, Initiatorzulauf, Thermometer, Ölheizung und Rückflußkühler werden 25,00 kg Ethylethoxypropionat vorgelegt und auf 130 Grad C aufgeheizt. Dann wird eine Lösung von 2,7 kg tert.- Butylperoxyethylhexanoat in 4,1 kg Gew.-Teilen n-Butanol in einer solchen Geschwindigkeit zugegeben, daß die Zugabe nach 4,5 Stunden abgeschlossen ist. 5 Minuten nach Beginn der Zugabe der tert.-Butylperoxyethylhexanoatlösung wird auch mit der Zugabe der Monomermischung (erster Monomerenzulauf) aus (a1), (a2) und (a6)
(a1): 7,13 kg n-Butylmethacrylat 5,72 kg Methylmethacrylat, 3,16 kg Laurylacrylat (Handelsprodukt Methacrylester 13 der Firma Röhm GmbH, Darmstadt),
(a2): 6,76 kg Hydroxyethylacrylat und
(a6): 5,96 kg Styrol
begonnen.

Die Mischung (a1), (a2) und (a6) wird in einer solchen Geschwindigkeit zugegeben, daß die Zugabe nach 4 Stunden abgeschlossen ist.

2,5 Stunden nach Beginn des ersten Monomerenzulaufs wird mit der Zugabe (zweiter Monmerenzulauf) von:
(a2) 2,80 kg Hydroxyethylacrylat und
(a3) 1,36 kg Acrylsäure
in 0,68 kg Ethylethoxypropionat begonnen.

Der zweite Monomerenzulauf ist nach 1,5 Stunden gemeinsam mit dem ersten Monomerenzulauf beendet.

Nach Beendigung der Zugabe der tert.-Butylperoxyethylhexanoatlösung, die 25 Minuten nach Beendigung der Monomerenzuläufe abgeschlossen ist, wird noch 0,3 Gew.-% Initiatorlösung, bezogen auf die im Zulauf eingesetzte Menge, nachdosiert und die Reaktionsmischung noch 1 Stunde bei 130 Grad C gehalten.

Durch Abdestillieren eines Teil des Ethylethoxypropionats wird eine Polyacrylatharz(PAC)-Lösung (I12) mit einem Festkörpergehalt von 79,2%, einer Säurezahl von 31,1 mg KOH/g und einer Viskosität von 4,4 dPas (55 %ige Lösung in Ethylethoxypropionat) erhalten.

### 2.2.2. Herstellung der Komponente (I'), enthaltend kein erfindungsgemäßes Polyurethanhrz PUR

14,4 Gew.-Teile der Polyacrylat(PAC)-Bindemittelkomponente (I1) mit einem Festkörpergehalt von 80 % werden mit einem Lösemittel-Gemisch (Komponente (I3)) aus 3,2 Gew.-Teilen Butylglykolacetat und 3,0 Gew.-Teilen Butylglykol vermischt. Diesem Gemisch wird als Komponente (I4) eine Mischung aus 1,0 Gew.-Teilen eines Netzmittels (Tensid® S der Firma Biesterfeld), 0,2 Gew.-Teilen eines Slip-Additivs (Byk® 331 der Firma Byk) sowie 0,2 Gew.-Teilen Additiv auf Basis eines Polysiloxanpolyether-Copolymerisats (Tegoflow® 425 der Firma Goldschmidt AG) gelöst in 0,4 Gew.-Teilen Methoxypropylacetat zugegeben.
Es resultiert die Komponente (I').

### 2.3. Herstellung der Komponente (II)

Aus den im folgenden angegebenen Bestandteilen wird durch Mischen mittels eines Rührers (600 Umdrehungen pro Minute) die Komponente (II) hergestellt:
- 2,9 Gew.-Teile: Polyisocyanat auf Basis Hexamethylendiisocyanat-Allophanat (Desmodur® VPLS 2102 der Firma Bayer AG),
- 10,7 Gew.-Teile: Polyisocyanat auf Basis Hexamethylendiisocyanat-Trimerisat (Tolonate® HDTLV der Firma Rhone-Poulenc) und
- 1,6 Gew.-Teile: Ethylethoxypropionat.

### 2.4. Herstellung und Applikation des erfindungsgemäßen wäßrigen 3-Komponenten-Klarlacks KL bzw. des nicht erfindungsgemäßen wäßrigen 3-Komponenten-Klarlacks KL'

Kurz vor der Applikation des Klarlacks werden zunächst 15,2 Gew.-Teile der Komponente (II) gemäß Beispiel 2.3. unter intensivem Rühren zu 22,4 Gew.-Teilen der Komponente (I) gegeben.
Diese Mischung wird anschließend mit 59,8 Teilen der Komponente (III) bzw. (III') intensiv vermischt.
Es resultieren der Klarlack KL, enthaltend die erfindungsmäße Komponente (III) mit dem Polyurethanharz PUR, und der Klarlack KL', enthaltend die nicht erfindungsgemäße Komponente (III') ohne das Polyurethanharz PUR.

Als Substrate für den erfindungsgemäßen wäßrigen 3-Komponenten-Klarlack werden phosphatierte Stahlbleche verwendet, die zunächst mit einem handelsüblichen Füller (Glasurit® Grundfüller EP 801-1552 der Firma Glasurit GmbH) mittels Spritzauftrag beschichtet, 45 Minuten bei 80 Grad C und 16 Stunden bei Raumtemperatur getrocknet (Trockenfilmschichtdicke 40 bis 60 Mikrometer) und mit Schleifpapier 800 und Excenterschleifer naß geschliffen. Auf die Füllerschicht wird ein Basislack aus einer Mischung aus 80 Gew.-Teilen eines handelüblichen Metallic-Basislacks (Basislack AE 54 M 99/9, Basisfarbe Aluminium superfein, der Firma Glasurit GmbH auf Basis eines hydroxylgruppenhaltigen Polyesters, Celluloseacetobutyrat und eines Melaminharzes) und 20 Gew.-Teilen eines weiteren handelsüblichen Basislacks (Basislack AE 54 M 552, Basisfarbe Helioblau, der Firma Glasurit GmbH auf Basis eines hydroxylgruppenhaltigen Polyesters, Celluloseacetobutyrat, Wachs und eines Melaminharzes) aufgebracht, indem zunächst ein Spritzgang aufgetragen wird und nach einer Zwischenablüftzeit von 5 Minuten ein zweiter Spritzgang aufgebracht wird (Spritzdruck jeweils 4 bis 5 bar).
Nach einer weiteren Ablüftzeit von 30 Minuten wird der, wie oben beschrieben hergestellte, 3-Komponenten-Klarlack KL bzw. KL' appliziert, wobei zunächst ein Spritzgang aufgetragen wird und nach einer Zwischenablüftzeit von 10 Minuten ein zweiter und dritter Spritzgang aufgetragen wird (Spritzdruck jeweils 4 bis 5 bar).
Basislack und Klarlack KL bzw. KL' werden gemeinsam 30 Minuten bei einer Temperatur von 60 Grad C gehärtet. Die Trockenfilmdicke des Basislacks beträgt 10 bis 20 Mikrometer. Die Trockenfilmdicke des Klarlacks KL bzw. KL' beträgt 50 bis 80 Mikrometer.

Dieser Mehrschichtverbund mit dem erfindungsgemäßen Klarlack KL bzw. dem nicht erfindungsgemäßen Klarlack KL' als Deckschicht wird zunächst 5 Tage gealtert und danach einem Wassersprühtest unterzogen, wobei die Prüftafeln in einem Zyklus in einer geschlossenen Kammer bei 20 Grad C 5 Minuten pro Stunde während einer Zeit von 23 Stunden mit destilliertem Wasser besprüht werden. Der Zyklus beinhaltet 1 Stunde Zeit zur Zwischenauswertung und dauert dementsprechend 24 Stunden.
Nach dem Wassersprühtest werden an den Prüftafeln folgenden Prüfungen ausgeführt:
1. Visuelle Beurteilung der Veränderung des Metallic-Effekts (0 = unverändert bis 5 = sehr stark verändert).
2. Gitterschnitt-Test an der Klarlackschicht nach DIN 53 151
3. Visuelle Beurteilung eines Kreuzschnitts an der Klarlackschicht aus KL bzw. KL' nach Belastung des Kreuzschnitts mittels eines Dampfstrahls von 80 bar Druck, der im Abstand von 5 cm und in einem Winkel von 90 Grad für 5 Sekunden auf den Kreuzschnitt gerichtet wurde (0 = keine Veränderung bis 5 = sehr starke Veränderung der Schnittkanten)

**Tabelle 2:**

| Prüfung der Klarlackschichten KL bzw KL' | | |
|---|---|---|
| Prüfung | Klarlack KL | Klarlack KL' |
| Optische Veränderung des Metallic-Effekts nach 10 Zyklen | 3 | 4 |
| Gitterschnitt-Test nach DIN 53 151 nach 10 Zyklen | Gt0 | Gt1-2 |
| Kreuzschnitt-Test nach 10 Zyklen | 0 | 5 |

## Patentansprüche

1. Beschichtungsmittel für die Herstellung schwitzwasserbeständiger Beschichtungen, enthaltend Bindemittel auf Polyurethanharzbasis sowie als weitere Bindemittel noch mindestens ein Polyacrylatharz PAC und/oder mindestens ein Polyesterharz PES, **dadurch gekennzeichnet, daß** das Polyurethanharz PUR alpha, omega-Polymethacrylatdiole (A) als Struktureinheiten enthält.

2. Beschichtungsmittel nach Anspruch 1, **dadurch gekennzeichnet, daß** es sich um ein wäßriges Beschichtungsmittel handelt.

3. Beschichtungsmittel nach Anspruch 1 oder 2, **dadurch gekennzeichnet, daß** das Polyurethanharz PUR ein zahlenmittleres Molekulargewicht Mn zwischen 1000 und 30000 Dalton, gegebenenfalls eine Hydroxylzahl zwischen 20 und 200 mg KOH/g sowie gegebenenfalls eine Säurezahl zwischen 5 und 150 mg KOH/g aufweist.

4. Beschichtungsmittel nach einem der Ansprüche 1 bis 3, **dadurch gekennzeichnet, daß** die alpha, omega- Polymethacrylatdiole (A) aus den Monomereinheiten Methylmethacrylat, Ethylmethacrylat, Propylmethacrylat, n-Butyl-methacrylat, iso-Butylmethacrylat, tert.-Butylmethacrylat, n-Pentylmethacrylat, Amylmethacrylat, n-Hexylmethacrylat, n-Octylmethacrylat, 2-Ethylhexylmethacrylat, n-Decylmethacrylat, Cyclopentylmethacrylat, Cyclohexylmethacrylat, 4-tert.- Butylcyclohexylmethacrylat, Cyclooctylmethacrylat, Phenylmethacrylat oder Isobornylmethacrylat bzw. aus deren Gemischen aufgebaut sind.

5. Beschichtungsmittel nach einem der Ansprüche 1 bis 4, **dadurch gekennzeichnet, daß** die Polyurethanharze PUR aufgebaut sind aus:
A) 1 bis 80 Gew.-% des Polymethacrylatdiols (A),
B) 1 bis 55 Gew.-% eines Di- und/oder Polyisocyanats (B),
C) 0 bis 25 Gew.-% einer Komponente (C), die mindestens 2 mit Isocyanatgruppen reagierende Gruppen und mindestens eine zur Anionenbildung befähigte Gruppe enthält,
D) 0 bis 25 Gew.-% von der Komponente (C) verschiedene Di- und/oder Polyole (D1) und/oder Polyamine (D2) als Modifizierungsmittel und
E) 0 bis 50 Gew.-% einer Komponente (E) mit einem aktiven Wasserstoffatom,
wobei die Summe der Komponenten (A) bis (E) 100 Gew.-% des Polyurethanharzes PUR ausmachen.

6. Beschichtungsmittel nach einem der Ansprüche 1 bis 5, **dadurch gekennzeichnet, daß** zur Herstellung der Polyurethanharze PUR Diisocyanate (B) der allgemeinen Formel (1) 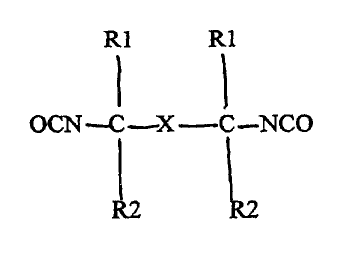 eingesetzt werden, wobei:
x für einen zweiwertigen, aromatischen Kohlenwasserstoffrest, vorzugsweise für einen gegebenenfalls halogen-, methyl- oder methoxysubstituierten Naphthylen-Diphenylen- oder 1,2-, 1,3- oder 1,4Phenylenrest und R1 und R2 für gegebenenfalls verschiedene Alkylreste mit 1 bis 4 Kohlenstoffatomen stehen.

7. Beschichtungsmittel nach einem der Ansprüche 1 bis 6, **dadurch gekennzeichnet, daß** das Polyacrylatharz PAC erhältlich ist durch Polymerisation in einem organischen Lösemittel oder einem Lösemittelgemisch und in Gegenwart mindestens eines Polymerisationsinitiators von
a1) einem von (a2), (a3), (a4), (a5) und (a6) verschiedenen, mit (a2), (a3), (a4), (a5) und (a6) copolymerisierbaren, carboxylgruppenfreien (Meth)acrylsäureester, oder einem Gemisch aus solchen Monomeren,
a2) einem mit (a1), (a3), (a4), (a5) und (a6) copolymerisierbaren, von (a5) verschiedenen, ethylenisch ungesättigten Monomer, das mindestens eine Hydroxylgruppe pro Molekül trägt und carboxylgruppenfrei ist, oder einem Gemisch aus solchen Monomeren,
a3) einem mindestens eine Carboxylgruppe pro Molekül tragenden, mit (a1), (a2), (a4), (a5) und (a6) copolymerisierbaren, ethylenisch ungesättigten Monomer oder einem Gemisch aus solchen Monomeren und
a4) gegebenenfalls einem oder mehreren Vinylestern von in alpha-Stellung verzweigten Monocarbonsäuren mit 5 bis 18 C-Atomen je Molekül und/oder
a5) gegebenenfalls mindestens einem Umsetzungsprodukt aus Acrylsäure und/oder Methacrylsäure mit den Glycidylester einer in alpha-Stellung verzweigten Monocarbonsäure mit 5 bis 18 C-Atomen je Molekül oder anstelle des Umsetzungsproduktes einer äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül umgesetzt wird,
a6) gegebenenfalls einen mit (a1),(a2), (a3), (a4), und (a5) copolymerisierbaren, von (a1), (a2), (a4) und (a5) verschiedenen, carboxylgruppenfreien, ethylenisch ungesättigten Monomer oder einem Gemisch aus solchen Monomeren,
wobei (a1), (a2), (a3), (a4), (a5) und (a6) in Art und Menge so ausgewählt werden, daß das Polyacrylatharz PAC eine OH-Zahl von 40 bis 200 mg KOH/g, eine Säurezahl von fünf bis 150 mg KOH/g und ein zahlenmittleres Molekulargewicht zwischen 1.000 und 30.000 aufweist.

8. Beschichtungsmittel nach einem der Ansprüche 1 bis 7, **dadurch gekennzeichnet, daß** das Polyesterharz PES erhältlich durch Umsetzung von
p1) Polycarbonsäuren oder deren veresterungsfähigen Derivaten, gegebenenfalls zusammen mit Monocarbonsäuren,
p2) Polyolen, gegebenenfalls zusammen mit Monoolen,
p3) gegebenenfalls Verbindungen, die von (p4) verschieden sind und mindestens eine gegenüber den funktionellen Gruppen des Polyesters reaktive Gruppe enthalten,
p4) gegebenenfalls einer mit dem Reaktionsprodukt aus (p1), (p2) und gegebenenfalls (p3) reaktionsfähigen Komponente.

9. Beschichtungsmittel nach einem der Ansprüche 1 bis 8, **dadurch gekennzeichnet, daß** das Beschichtungsmittel aufgebaut ist aus einer Komponente (I) und/oder aus einer wäßrigen Komponente (III), wobei das erfindungsgemäße Polyurethanharz PUR in der Komponente (I) und/oder in der Komponente (III) enthalten ist, sowie gegebenenfalls aus einer Vernetzer-Komponente (II) und gegebenenfalls aus einer weiteren Komponenten (IV), enthaltend einen Teil oder die gesamte Menge der in dem Beschichtungsmittel eingesetzten Hilfs- und Zusatzstoffe.

10. Beschichtungsmittel nach Anspruch 9, **dadurch gekennzeichnet, daß** die Komponente (I) aufgebaut ist aus:
(I1) 20 bis 90 Gew.-%, des Bindemittels (I1), enthaltend, bezogen auf das Bindemittel (I1),
(I11) 0 bis 100 Gew.-% des erfindungsgemäßen Polyurethanharzes PUR,
(I12) 0 bis 95 Gew.-% eines Polyacrylats PAC,
(I13) 0 bis 30 Gew.-% mindestens eines Polyesters PES, und
(I14) 0 bis 50 Gew.-% mindestens eines weiteren Bindemittels,
wobei die Summe der Gewichtsanteile der Komponenten (I11) bis (I14) 100 Gew.-% des Bindemittels (I1) ausmacht.
(I2) 0 bis 60 Gew.-% mindestens eines Pigments und/oder Füllstoffs (I2),
(I3) 5 bis 50 Gew.-% mindestens eines organischen, vorzugsweise wasserverdünnbaren Lösemittels (I31) und/oder Wasser (I32),
(I4) 0 bis 20 Gew.-% mindestens eines gegebenenfalls wäßrigen Neutralisationsmittels (I4),
(I5) 0 bis 5 Gew.-% mindestens eines gegebenenfalls wäßrigen rheologiesteuernden Additivs (I5) und
(I6) 0 bis 20 Gew.-% mindestens eines üblichen Lackadditivs
bestehen, wobei die Summe der Gewichtsanteile der Komponenten (I1) bis (I6) jeweils 100 Gew.-%, bezogen auf die Komponente (I), beträgt.

11. Beschichtungsmittel nach Anspruch 10, **dadurch gekennzeichnet, daß** das Bindemittel (I1)
(I11) 5 bis 100 Gew.-%, bezogen auf das Bindemittel (I1), des erfindungsgemäßen Polyurethanharzes PUR enthält.

12. Beschichtungsmittel nach einem der Ansprüche 9 bis 11, **dadurch gekennzeichnet, daß** die Vernetzerkomponente (II) mindestens ein gegebenenfalls in einem oder mehreren organischen, wasserverdünnbaren Lösemitteln gelöstes oder dispergiertes Di- und/oder Polyisocyanat (III1), sowie gegebenenfalls mindestens ein weiteres Vernetzungsmittel, ausgewählt aus mindestens einer Epoxidverbindung (III2) mit mindestens zwei Epoxidgruppen pro Molekül und/oder mindestens einem Aminoplastharz (II13) enthält.

13. Beschichtungsmittel nach einem der Ansprüche 9 bis 12, **dadurch gekennzeichnet, daß** die Komponente (III) aufgebaut ist aus:
(III1) 40 bis 100 Gew.- % Wasser,
(III2) 0 bis 50 Gew.-% der Bindemittelkomponente (I1) in wasserdispergierter Form, enthaltend, bezogen auf das Bindemittel (I1),
(I11) 0 bis 100 Gew.-% des erfindungsgemäßen Polyurethanharzes PUR,
(I12) 0 bis 95 Gew.-% eines Polyacrylats PAC,
(I13) 0 bis 30 Gew.-% mindestens eines Polyesters PES, und
(I14) 0 bis 50 Gew.-% mindestens eines weiteren Bindemittels,
wobei die Summe der Gewichtsanteile der Komponenten (I11) bis (I14) 100 Gew.-% des Bindemittels (I1) ausmacht,
(III3) 0 bis 20 Gew.-% mindestens eines Neutralisationsmittels (I4),
(III4) 0 bis 20 Gew.-% mindestens eines üblichen Hilfs- und/oder Zusatzstoffes (III4) and
(III5) 0 bis 20 Gew.-% mindestens eines Emulsionspolymerisates (III5)
bestehen, wobei die Summe der Gewichtsanteile der Komponenten (III1) bis (III5) jeweils 100 Gew.-%, bezogen auf die Komponente (III), beträgt.

14. Verfahren zur Herstellung von Beschichtungsmitteln nach einem der Ansprüche 9 bis 13, **dadurch gekennzeichnet, daß** die Komponenten (I), (II), (III) und (IV) bis zu 6 Monate vor der Applikation des Beschichtungsmittels gemischt werden.

15. Verfahren nach Anspruch 14, **dadurch gekennzeichnet, daß** zunächst die Komponenten (I) und (II) gemischt werden, danach gegebenenfalls die Komponente (IV) zugegeben wird und abschließend die so erhaltene Mischung mit der wäßrigen Komponente (III) gemischt wird.

16. Verwendung der Beschichtungsmittel gemäß den Ansprüchen 1 bis 13 zur Herstellung von Basislacken und/oder Decklacken.

17. Verwendung der Beschichtungsmittel gemäß den Ansprüchen 1 bis 13 als Füller, Basislacke und/oder Decklacke bei der Automobilserienlackierung und/oder bei der Autoreparaturlackierung.

## Claims

1. Coating compositions for the production of coatings which are resistant to condensed water, comprising binders based on polyurethane resin and as further binders at least one polyacrylate resin PAC and/or at least one polyester resin PES, **characterized in that** the polyurethane resin PUR contains alpha,omega-polymethacrylatediols (A) as structural units.

2. Coating compositions according to claim 1,
**characterized in that** it is an aqueous coating composition.

3. Coating compositions according to claim 1 or 2, **characterized in that** the polyurethane resin PUR has a number-average molecular weight Mn of between 1000 and 30,000 daltons, if appropriate a hydroxyl number of between 20 and 200 mg of KOH/g and, if appropriate, an acid number of between 5 and 150 mg of KOH/g.

4. Coating compositions according to one of claims 1 to 3, **characterized in that** the alpha, omega-polymethacrylatediols (A) are composed of monomer units methyl methacrylate, ethyl methacrylate, propyl methacrylate, n-butyl methacrylate, isobutyl methacrylate, tert-butyl methacrylate, n-pentyl methacrylate, amyl methacrylate, n-hexyl methacrylate, n-octyl methacrylate, 2-ethylhexyl methacrylate, n-decyl methacrylate, cyclopentyl methacrylate, cyclohexyl methacrylate, 4-tert-butylcyclohexyl methacrylate, cyclooctyl methacrylate, phenyl methacrylate or isobornyl methacrylate and/or of mixtures thereof.

5. Coating compositions according to one of claims 1 to 4, **characterized in that** the polyurethane resins PUR are composed of:
A) from 1 to 80% by weight of the polymethacrylatediol (A),
B) from 1 to 55% by weight of a di- and/or polyisocyanate (B),
C) from 0 to 25% by weight of a component (C) which contains at least 2 groups which react with isocyanate groups and at least one group capable of forming anions,
D) from 0 to 25% by weight of di- and/or polyols (D1) and/or polyamines (D2) which are different from component (C) as modifying agents, and
E) from 0 to 50% by weight of a component (E) containing an active hydrogen atom,
the sum of components (A) to (E) making up 100% by weight of the polyurethane resin PUR.

6. Coating compositions according to one of claims 1 to 5, **characterized in that** the polyurethane resins PUR are prepared using diisocyanates (B) of the general formula (1) 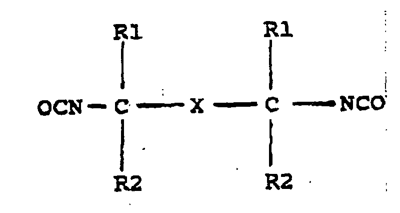 in which:
X is a divalent, aromatic hydrocarbon radical, preferably an unsubstituted or halogen-substituted, methyl-substituted or methoxy-substituted naphthylene, diphenylene or 1,2-, 1,3- or 1,4-phenylene radical, and R1 and R2 are optionally different alkyl radicals having 1 to 4 carbon atoms.

7. Coating compositions according to one of claims 1 to 6, **characterized in that** the polyacrylate resin PAC is obtainable by polymerization, in an organic solvent or a solvent mixture and in the presence of at least one polymerization initiator, of
a1) a carboxyl-free (meth)acrylate which is different from (a2), (a3), (a4), (a5) and (a6) and is copolymerizable with (a2), (a3), (a4), (a5) and (a6), or a mixture of such monomers,
a2) an ethylenically unsaturated monomer which is different from (a5), is copolymerizable with (a1), (a3), (a4), (a5) and (a6), carries at least one hydroxyl group per molecule and is carboxyl-free, or a mixture of such monomers,
a3) an ethylenically unsaturated monomer which carries at least one carboxyl group per molecule and is copolymerizable with (a1), (a2), (a4), (a5) and (a6), or a mixture of such monomers, and
a4) if desired, one or more vinyl esters of alpha-branched monocarboxylic acids having 5 to 18 carbon atoms per molecule, and/or
a5) if desired, at least one reaction product of acrylic acid and/or methacrylic acid with the glycidyl ester of an alphabranched monocarboxylic acid having 5 to 18 carbon atoms per molecule or, instead of the reaction product, an equivalent quantity of acrylic and/or methacrylic acid which is then reacted, during or after the polymerization reaction, with the glycidyl ester of an alpha-branched monocarboxylic acid having 5 to 18 carbon atoms per molecule,
a6) if desired, a carboxyl-free, ethylenically unsaturated monomer which is copolymerizable with (a1), (a2), (a3), (a4) and (a5) and is different from (a1), (a2), (a4) and (a5), or a mixture of such monomers,
the nature and quantity of (a1), (a2), (a3), (a4), (a5) and (a6) being selected such that the polyacrylate resin PAC has an OH number of from 40 to 200 mg KOH/g, an acid number of from five to 150 mg KOH/g and a number-average molecular weight of from 1000 to 30,000.

8. Coating compositions according to one of claims 1 to 7, **characterized in that** the polyester resin PES is obtainable by reacting
p1) polycarboxylic acids or esterifiable derivatives thereof, together, if desired, with monocarboxylic acids,
p2) polyols, together, if desired, with monools,
p3) if desired, compounds which are different from (p4) and comprise at least one group which is reactive toward the functional groups of the polyester,
p4) if desired, a component which is reactive with the reaction product of (p1), (p2) and, if used, (p3).

9. Coating compositions according to one of claims 1 to 8, **characterized in that** the coating composition is composed of a component (I) and/or of an aqueous component (III), in which case the novel polyurethane resin PUR is present in component (I) and/or in component (III), and, if desired, of a crosslinking component (II) and if desired, of a further component (IV) containing some or all of the auxiliaries and additives employed in the coating composition.

10. Coating compositions according to claim 9,
**characterized in that** component (I) is composed of
(I1) from 20 to 90% by weight of the binder
(I1), containing, based on the binder (I1),
(I11) from 0 to 100% by weight of the novel polyurethane resin PUR,
(I12) from 0 to 95% by weight of a polyacrylate PAC,
(I13) from 0 to 30% by weight of at least one polyester PES, and
(I14) from 0 to 50% by weight of at least one further binder,
the sum of the proportions by weight of components (I11) to (I14) making up 100% by weight of the binder (I1),
(I2) from 0 to 60% by weight of at least one pigment and/or filler (I2),
(I3) from 5 to 50% by weight of at least organic, preferably water-dilutable solvent (I31) and/or water (I32),
(I4) from 0 to 20% by weight of at least one optionally aqueous neutralizing agent (I4),
(I5) from 0 to 5% by weight of at least one optionally aqueous rheology-controlling additive (I5), and
(I6) from 0 to 20% by weight of at least one customary paint additive,
the sum of the proportions by weight of components (I1) to (I6) being in each case 100% by weight, based on component (I).

11. Coating compositiong according to claim 10,
**characterized in that** the binder (I1) comprises
(I11) from 5 to 100% by weight, based on the binder (I1), of the novel polyurethane resin PUR,

12. Coating composition according to one of claims 9 to 11, **characterized in that** the crosslinking component (II) contains at least one preferably non-blocked di- and/or polyisocyanate (II11) which is optionally dissolved or dispersed in one or more organic, water-dilutable solvents, and also, if desired, at least one further crosslinking agent selected from at least one epoxide compound (II12) having at least two epoxide groups per molecule and/or at least one amino resin (II13).

13. Coating compositions according to one of claims 9 to 12, **characterized in that** component (III) is composed of:
(III1) from 40 to 100% by weight of water,
(III2) from 0 to 50% by weight of the binder component (I1) in water-dispersed form, based on the binder (I1),
(I11) from 0 to 100% by weight of the novel polyurethane resin PUR,
(I12) from 0 to 95% by weight of a polyacrylate PAC,
(I13) from 0 to 30% by weight of at least one polyester PES, and
(I14) from 0 to 50% by weight of at least one further binder,
the sum of the proportions by weight of components (I11) to (I14) making up 100% by weight of the binder (I1),
(III3) from 0 to 20% by weight of at least one neutralizing agent (I4),
(III4) from 0 to 20% by weight of at least one customary auxiliary and/or additive (III4), and
(III5) from 0 to 20% by weight of at least one emulsion polymer (III5),
the sum of the proportions by weight of components (III1) to (III5) being in each case 100% by weight, based on (III).

14. Process for preparing coating compositions according to one of claims 9 to 13, **characterized in that** components (I), (II), (III) and (IV) are mixed up to 6 months prior to the application of the coating composition.

15. Process according to claim 14, **characterized in that** first of all components (I) and (II) are mixed, then, if used, component (IV) is added, and finally the resulting mixture is mixed with the aqueous component (III).

16. Use of the coating compositions according to claims 1 to 13 for the production of basecoats and/or topcoats.

17. Use of the coating compositions according to claims 1 to 13 as fillers, basecoats and/or topcoats in the production-line finishing of automobiles and/or in automotive refinishing.

## Revendications

1. Produit de revêtement pour la production de revêtements résistants à l'eau de condensation, contenant des liants à base de résine polyuréthanne ainsi que, comme autres liants, encore au moins une résine polyacrylate PAC et/ou au moins une résine polyester PES, **caractérisé en ce que** la résine polyuréthanne PUR contient comme motifs structuraux des α,Ω-polyméthacrylate-diols (A).

2. Produit de revêtement selon la revendication 1, **caractérisé en ce qu'**il s'agit d'un produit de revêtement aqueux.

3. Produit de revêtement selon la revendication 1 ou 2, **caractérisé en ce que** la résine polyuréthanne PUR présente une masse moléculaire moyenne en nombre Mn comprise entre 1 000 et 30 000 daltons, éventuellement un indice de groupes hydroxy compris entre 20 et 200 mg de KOH/g, ainsi qu'éventuellement un indice d'acide compris entre 5 et 150 mg de KOH/g.

4. Produit de revêtement selon l'une quelconque des revendications 1 à 3, **caractérisé en ce que** les a, Ω-polyméthacrylate-diols (A) sont constitués des motifs monomères méthacrylate de méthyle, méthacrylate d'éthyle, méthacrylate de propyle, méthacrylate de n-butyle, méthacrylate d'isobutyle, méthacrylate de tert-butyle, méthacrylate de n-pentyle, méthacrylate d'amyle, méthacrylate de n-hexyle, méthacrylate de n-octyle, méthacrylate de 2-éthylhexyle, méthacrylate de n-décyle, méthacrylate de cyclopentyle, méthacrylate de cyclohexyle, méthacrylate de 4-tertbutylcyclohexyle, méthacrylate de cyclo-octyle, méthacrylate de phényle ou méthacrylate d'isobornyle, ou de mélanges de ceux-ci.

5. Produit de revêtement selon l'une quelconque des revendications 1 à 4, **caractérisé en ce que** les résines polyuréthanne PUR sont constituées de :
A) 1 à 80% en poids du polyméthacrylate-diol (A),
B) 1 à 55% en poids d'un di- ou polyisocyanate (B),
(C) 0 à 25% en poids d'un composant (C) qui contient au moins 2 groupes réagissant avec des groupes isocyanate et au moins un groupe apte à la formation d'anions,
(D) 0 à 25% en poids de diols et/ou polyols (D1) différents du composant (C) et/ou de polyamines (D2) en tant qu'agent modificateur et
(E) 0 à 50% en poids d'un composant (E) comportant un atome d'hydrogène actif, la somme des composants (A) à (E) constituant 100% en poids de la résine polyuréthanne PUR.

6. Produit de revêtement selon l'une quelconque des revendications 1 à 5, **caractérisé en ce que**, pour la préparation des résines polyuréthanne PUR, on utilise des diisocyanates (B) de formule générale (I) 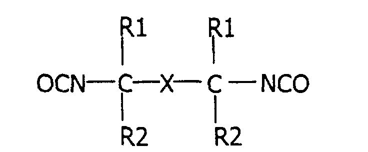 dans laquelle :
x représente un radical hydrocarboné aromatique divalent, de préférence un radical naphtylène, diphénylène ou 1,2-, 1,3- ou 1,4-phénylène éventuellement substitué par un atome d'halogène ou par le groupe méthyle ou méthoxy, et R1 et R2 représentent des radicaux alkyle éventuellement différents, ayant de 1 à 4 atomes de carbone.

7. Produit de revêtement selon l'une quelconque des revendications 1 à 6, **caractérisé en ce que** la résine polyacrylate PAC peut être obtenue par polymérisation dans un solvant organique ou un mélange de solvants, et en présence d'au moins un amorceur de polymérisation, de
a1) un ester d'acide (méth)acrylique exempt de groupes carboxy libres, différent de (a2), (a3), (a4), (a5) et (a6), copolymérisable avec (a2), (a3), (a4), (a5) et (a6), ou.d'un mélange de tels monomères,
a2) un monomère à insaturation éthylénique, différent de (a5), copolymérisable avec (a1), (a3), (a4), (a5) et (a6), qui porte au moins un groupe hydroxy par molécule et est exempt de groupes carboxy libres, ou d'un mélange de tels monomères,
a3) un monomère à insaturation éthylénique, portant au moins un groupe carboxy par molécule, copolymérisable avec (a1), (a2), (a4), (a5) et (a6), ou d'un mélange de tels monomères et
a4) éventuellement un ou plusieurs esters vinyliques d'acides monocarboxyliques ramifiés en position a, ayant de 5 à 18 atomes de carbone par molécule et/ou
a5) éventuellement au moins un produit de réaction d'acide acrylique et/ou d'acide méthacrylique avec l'ester glycidylique d'un acide monocarboxylique ramifié en position a, ayant de 5 à 18 atomes de carbone par molécule ou au lieu du produit de réaction, d'une quantité équivalente d'acide acrylique et/ou méthacrylique qui est ensuite mis en réaction, pendant ou après la réaction de polymérisation, avec l'ester glycidylique d'un acide monocarboxylique ramifié en position a, ayant de 5 à 18 atomes de carbone par molécule,
a6) éventuellement un monomère à insaturation éthylénique, exempt de groupes carboxy libres, différent de (a1), (a2), (a4) et (a5), copolymérisable avec (a1), (a2), (a3), (a4) et (a5), ou d'un mélange de tels monomères, (a1), (a2), (a3), (a4), (a5) et (a6) étant choisis en nature et en quantité de manière que la résine polyacrylate PAC présente un indice de groupes OH de 40 à 200 mg de KOH/g, un indice d'acide de cinq à 150 mg de KOH/g et une masse moléculaire moyenne en nombre comprise entre 1 000 et 30 000.

8. Produit de revêtement selon l'une quelconque des revendications 1 à 7, **caractérisé en ce que** la résine polyester PES peut être obtenue par la réaction
p1) d'acides polycarboxyliques ou de leurs dérivés estérifiables, éventuellement conjointement avec des acides monocarboxyliques,
p2) de polyols, éventuellement conjointement avec des monoalcools,
p3) éventuellement de composés qui sont différents de (p4) et comportent au moins un groupe réactif vis-à-vis des groupes fonctionnels du polyester,
p4) éventuellement d'un composant réactif avec le produit de réaction de (p1), (p2) et éventuellement (p3).

9. Produit de revêtement selon l'une quelconque des revendications 1 à 8, **caractérisé en ce que** le produit de revêtement est constitué d'un composant (I) et/ou d'un composant aqueux (III), la résine polyuréthanne PUR selon l'invention étant contenue dans le composant (I) et/ou dans le composant (III), ainsi qu'éventuellement d'un composant de type agent de réticulation (II) et éventuellement d'autres composants (IV) contenant une partie ou la quantité totale des additifs et adjuvants utilisés dans le produit de revêtement.

10. Produit de revêtement selon la revendication 9, **caractérisé en ce que** le composant (I) est constitué de :
(I1) 20 à 90% en poids du liant (I1) contenant, par rapport au liant (I1),
(I11) 0 à 100% en poids de la résine polyuréthanne PUR selon l'invention,
(I12) 0 à 95% en poids d'un polyacrylate PAC,
(I13) 0 à 30% en poids d'un polyester PES, et
(I14) 0 à 50% en poids d'au moins un autre liant,
la somme des parties en poids des composants (I11) à (I14) constituant 100% en poids du liant (I1),
(I2) 0 à 60% en poids d'au moins un pigment et/ou une charge (I2),
(I3) 5 à 50% en poids d'au moins un solvant organique (I31) de préférence pouvant être dilué avec de l'eau et/ou d'eau (I32),
(I4) 0 à 20% en poids d'au moins un agent de neutralisation éventuellement aqueux (I4),
(I5) 0 à 5% en poids d'au moins un additif régulateur de rhéologie (I5) éventuellement aqueux, et
(I6) 0 à 20% en poids d'au moins un additif usuel pour peintures,
la somme des parties en poids des composants (I1) à (I6) étant dans chaque cas 100% en poids, par rapport au composant (I).

11. Produit de revêtement selon la revendications 10, **caractérisé en ce que** le liant (I1) contient (I11) de 5 à 100% en poids, par rapport au liant (I1) de la résine polyuréthanne PUR selon l'invention.

12. Produit de revêtement selon l'une quelconque des revendications 9 à 11, **caractérisé en ce que** le composant réticulant (II) contient au moins un di-et/ou polyisocyanate (II11) éventuellement dissous ou dispersé dans un ou plusieurs solvants organiques pouvant être dilués avec de l'eau, ainsi qu'éventuellement au moins un autre agent de réticulation choisi parmi au moins un composé de type époxyde (II12) comportant au moins deux groupes époxy par molécule et/ou au moins une résine aminoplaste (II13).

13. Produit de revêtement selon l'une quelconque des revendications 9 à 12, **caractérisé en ce que** le composant (III) est constitué de
(III1) 40 à 100% en poids d'eau,
(III2) 0 à 50% en poids du composant de type liant (I1) sous forme dispersée dans l'eau, contenant, par rapport au liant (I1),
(I11) de 0 à 100% en poids de la résine polyuréthanne PUR selon l'invention,
(I12) de 0 à 95% en poids d'un polyacrylate PAC,
(I13) de 0 à 30% en poids d'au moins un polyester PES, et
(I14) de 0 à 50% en poids d'au moins un autre liant,
la somme des parties en poids des composants (I11) à (I14) constituant 100% en poids du liant (I1),
(III3) 0 à 20% en poids d'au moins un agent de neutralisation (I4),
(III4) 0 à 20% en poids d'au moins un additif et/ou adjuvant usuel (III4) et
(III5) 0 à 20% en poids d'au moins un polymère en émulsion (III5),
la somme des parties en poids des composants (III1) à (III5) constituant dans chaque cas 100% en poids, par rapport au composant (III).

14. Procédé pour la préparation de produits de revêtement selon l'une quelconque des revendications 9 à 13, **caractérisé en ce que** les composants (I), (II), (III) et (IV) sont mélangés 6 mois avant l'application du produit de revêtement.

15. Procédé selon la revendication 14, **caractérisé en ce qu'**on mélange d'abord les composants (I) et (II), puis on ajoute éventuellement le composant (IV) et on mélange ensuite le mélange obtenu avec le composant aqueux (III).

16. Utilisation des produits de revêtement selon les revendications 1 à 13, pour la fabrication de peintures de base et/ou de peintures de finition.

17. Utilisation des produits de revêtement selon les revendications 1 à 13, en tant que charges, peintures de base et/ou peintures de finition dans la peinture de véhicules automobiles de série et/ou dans la peinture de réparation d'automobiles.
